# EUROPEAN PATENT SPECIFICATION

(11) **EP 2 936 922 B1**
(45) Date of publication and mention of the grant of the patent: **09.01.2019**
(21) Application number: 13722144.6
(22) Date of filing: 04.04.2013
(51) Int. Cl.: H04W 88/04, H04W 76/14

(54) **WIRELESS DEVICES, NETWORK NODE AND METHODS FOR HANDLING RELAY ASSISTANCE IN A WIRELESS COMMUNICATIONS NETWORK**
DRAHTLOSE VORRICHTUNGEN, NETZWERKKNOTEN UND VERFAHREN ZUR HANDHABUNG EINER RELAISHILFE IN EINEM DRAHTLOSEN KOMMUNIKATIONSNETZ
DISPOSITIFS SANS FIL, NOEUD DE RÉSEAU ET PROCÉDÉS PERMETTANT DE GÉRER UNE AIDE PAR RELAIS DANS UN RÉSEAU DE COMMUNICATIONS SANS FIL

(30) Priority: 19.12.2012 US 201261739048 P
(43) Date of publication of application: 28.10.2015
(73) Proprietor: Telefonaktiebolaget LM Ericsson (publ), 164 83 Stockholm (SE)
(72) Inventor: FODOR, Gabor, S-165 52 Hässelby (SE); SKILLERMARK, Per, S-120 54 Årsta (SE); FALLGREN, Mikael, S-164 44 Kista (SE)
(74) Representative: Zacco Sweden AB
(86) International application number: PCT/SE2013/050370
(87) International publication number: WO 2014/098702

(56) References cited:
- WO-A2-2011/153507
- US-A1- 2006 251 258
- US-A1- 2011 117 907
- US-A1- 2012 129 540

## Description

### TECHNICAL FIELD

Embodiments herein relate to a first wireless device, a second wireless device, a network node and methods therein. In particular, it relates to handling relay assistance.

### BACKGROUND

Communication devices such as wireless devices are also known as e.g. User Equipments (UEs), terminals, mobile terminals, wireless terminals and/or mobile stations. Wireless devices are enabled to communicate wirelessly in a cellular communications network or wireless communications networks, sometimes also referred to as a cellular radio system or cellular networks. The communication may be performed e.g. between two wireless devices, between a wireless device and a regular telephone and/or between a wireless device and a server via a Radio Access Network (RAN) and possibly one or more core networks, comprised within the cellular communications network.

Wireless device may further be referred to as mobile telephones, cellular telephones, laptops, or surf plates with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the wireless devices within range of the base stations. In the context of this disclosure, the expression Downlink (DL) is used for the transmission path from the base station to the user equipment. The expression Uplink (UL) is used for the transmission path in the opposite direction i.e. from the user equipment to the base station.

In 3rd Generation Partnership Project (3GPP) Long Term Evolution (LTE), base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipments. The 3GPP has undertaken to evolve further the UTRAN and GSM based radio access network technologies.

3GPP LTE radio access standard has been written in order to support high bitrates and low latency both for uplink and downlink traffic. All data transmission is in LTE controlled by the radio base station.

### Device-to-Device Communication in Cellular Spectrum

Device-to-device communications in cellular spectrum is a relatively new concept that targets scenarios in which communicating parties are in the close proximity of each other. Such communication may be assisted by the cellular network infrastructure when it is available, or it may take place in an ad hoc and autonomous fashion in case the cellular network is damaged. Specifically, in 3GPP LTE networks, such LTE Direct communication may be used in commercial applications, such as proximity based social networking or in public safety situations in which first responders need to communicate with each other and with people in the disaster area.

An important functionality in NetWork (NW) assisted D2D communication is Mode Selection (MS) that determines whether wireless devices in the proximity of each other should communicate via a direct link or through a cellular base station or access point. In existing technology, the MS algorithms are based on radio resource availability, propagation conditions, network load and other low layer aspects. Existing MS algorithms tend to select the D2D mode, i.e. direct mode for wireless devices that are in the proximity of each other and are far apart from cellular access points and user equipments so that the interference level caused to cellular nodes by D2D nodes can be kept at suitably low levels.

Existing MS algorithms are typically based on the radio distance between the wireless devices and the access point and take into account radio conditions, energy efficiency targets, power constraints, interference caused by D2D links to the cellular users and resource availability.

Neighbor device discovery algorithms or sometimes called peer device discovery algorithms or simply neighbor discovery algorithms serve the purpose of allowing wireless devices in the vicinity of one another to discover each other's presence and obtain information about the radio channel in between them. This is typically achieved by devices broadcasting and detecting so called beacon signals, sometimes called reference signals. The broadcasting and detecting of such beacon signals may also serve secondary purposes such as devices obtaining synchronization

### Cooperative Communications and Relaying Technologies

Cooperative communications by means of relaying have been studied and in some forms also used in cellular networks. The advantages of relay based cooperative communications over communications without relay based cooperation include performance gains, including coverage improvements, balanced quality of service and reduced infrastructure deployment costs. Because of these advantages, the research and engineering community has developed a number of relaying protocols, including transparent relaying, such as Amplify and Forward (AF), Linear process and Forward (LF) and non-Linear Process and forward (nLF), and regenerative relaying protocols. Examples of this latter category, i.e. regenerative relaying protocols, are Estimate and Forward (EF), Compress and Forward (CF), Decode and Forward (DF), Purge and Forward (PF), and Gather and Forward (GF). More information on different relaying protocols is provided below.

Cooperative communications in general and employing relaying in cellular and adhoc networks in particular allow wireless devices and infrastructure nodes of act jointly for a common goal, such as extending coverage, enhancing user bit rates, improve energy efficiency and communication reliability, etc.

A problem with existing neighbor discovery techniques is that they do not allow a wireless device to find other wireless devices with specific relaying capabilities and willingness to help.

WO 2012/118265 A1, a method and apparatus for transmitting data in a wireless communications system, discloses one way of solving the problem. It describes a means for how one UE, here referred to as the 'helper UE', may assist another UE, here referred to as the 'UE in need of assistance' during uplink communication with the access point. In the first phase the UE in need of assistance transmits a data packet intended for the access point. The helper UE overhears this transmission, and if the packet transmission is unsuccessful the helper UE takes part in the retransmission of the packet. The helper UE hence relays between a UE in need of assistance and the access point when retransmitting the packet. A disadvantage with this solution is that the helper UE must overhear all possible transmissions, even from UEs that are not in need of assistance, or determine autonomously if this is a UE in need of assistance. Hence, this solution is very heavy and inefficient for potential helpers as they need to receive all ongoing packet transmissions, and retransmit all packet retransmissions.

US 8275308 B2, method for relaying between a base station and mobile station, discloses another way of solving the problem. In this document relay stations take part in the retransmission of erroneous packets, just like in WO 2012/118265 A1 above, and a mutual cooperation manager is used to organize the retransmissions. The mutual cooperation manager is located in the relay station and holds a list to all UEs whose transmissions the relay station can decode. During operation the relay station decodes and stores temporarily all packets associated with the UEs on the mutual cooperation list. Furthermore, the mutual cooperation list is made available to the base station, and when a packet error occurs the base station checks if the source UE is on any of the mutual cooperation lists. When the UE is found on any of the mutual cooperation lists the base station schedules the packet retransmission from the relay station rather than from the UE.. A disadvantage with this solution is similar as the prior art above, but here the helper is a fixed relay and a mutual cooperation manager is used. Also, here all retransmissions are handled via the helper. The helper must listen to and decode all transmissions from UEs it can hear, perhaps it may afford this from an energy consumption point of view if it is connected to a power grid. But this may not be feasible in the case when the UE is mobile, due to excessive power consumption.

US2011/00117907 A1 discloses a method and a controller for selecting between a direct and a relayed radio connection based on the quality of the direct cellular communications link and the availability of relays. The reception strengths of the candidate relays is measured and is provided to the base station. If the measurements indicate sufficiently hight reception power with one of the candidate relay terminals, the base station configures a terminal and the selected relay to pair-up.

US 2012/129540 A1 discloses, when an active connection is established between a cellular network and a user equipment, UE, the use of a resource allocation message communicated between the cellular network and the UE.

US 2006/251258 A1 discloses a system, method for updating security criteria in wireless networks.

WO 2011/153507 A2 discloses a method and wireless device for expanding the coverage of a cellular network.

WO 2012/014729 A1 discloses a wireless base station transmitting a capability request message to a wireless terminal to transmit terminal capability information that indicates positioning capability of the wireless terminal.

### SUMMARY

It is therefore an object of embodiments herein to provide a way of improving the way of handling relay assistance between wireless devices.

According to a first aspect, the object is achieved by a method in a second wireless device for handling relay assistance from a first wireless device in a wireless network wherein the second wireless device is served by or is camping on a network node, as defined in clam 1. The second wireless device measure on reference signals from the network node, one or more out of a Reference Signal Received Power, RSRP, Reference Signal Received Quality, RSRQ, and Received Signal Strength Indicator, RSSI, and sends a first beacon signal to the first wireless device when any one of the RSRP, RSSI and/or RSRQ measurements falls below a threshold, which first beacon signal comprises information about preferred relay types of the second wireless device and which first beacon signal advertises that the second wireless device needs relay assistance in a radio communication, and/or the second wireless device receives a second beacon signal from the first wireless device, which second beacon signal comprises information about any one or more out of: link quality and/or signal strength to serving network node, relaying capability of the first wireless device and which second beacon signal advertises that the first wireless device provides relay assistance in accordance with the preferred relay types, in a radio communication in the wireless network. The second wireless device then configures a Device to Device, D2D, bearer between the first wireless device and the second wireless device based on the first beacon signal and/or the second beacon signal. This enables said communication to be performed via the D2D bearer wherein the first wireless device acts as a relay node. The the second wireless device further estimates the pathloss between the second wireless device and the first wireless device on the second beacons signal, and estimates the pathloss between second wireless device and the network node, and when the estimated pathloss between the second wireless device and the first wireless device is lower compared to the estimated pathloss between the second wireless device and the network node, the second wireless device selects the first wireless device as a candidate for providing relay assistance

According to a second aspect, the object is achieved by a method in a network node for handling relay assistance by a first wireless device to a second wireless device in a wireless network, as defined in claim 6. The second wireless device needs relay assistance in a radio communication. The network node receives one or more reports from the first wireless device and/or the second wireless device. The one or more reports comprise a respective measurement of a beacon signal sent between the first wireless device and the second wireless device. The one or more reports from the second wireless device wherein the *receiving* (602) one or more reports comprises a report comprising the pathloss between the second wireless device and the first wireless device being a candidate for providing relay assistance, and the measurement in the one or more reports exceeding a threshold is established by, based on the reported pathloss, and the node determines that the first wireless device is a candidate that shall provide relay assistance, if the candidate provides a route, from the second wireless device via the candidate to the network node, that has higher data rate than a route from the second wireless device direct to network node. The beacon signal is a first beacon signal transmitted from the second wireless device to the first wireless device, which first beacon signal comprises information about preferred relay types of the second wireless device and which first beacon signal advertises that the second wireless device needs relay assistance in a radio communication, or the beacon signal is a second beacon signal transmitted from the first wireless device to the second wireless device, which second beacon signal advertises that the first wireless device provides relay assistance, in accordance with the preferred relay types, in a radio communication in the wireless network. When the measurement in the one or more reports exceeds a threshold, the network node sends to the first wireless device and the second wireless device, a configuration of a Device to Device, D2D, bearer between the first wireless device and the second wireless device, enabling said communication to be performed via the D2D bearer wherein the first wireless device acts as a relay node. The one or more reports further comprises a respective report comprising the pathloss between the second wireless device and respective further wireless devices also being candidates for providing relay assistance, and the measurement in the one or more reports exceeding a threshold is established by, based on the reported pathloss and the network node further determines that the candidate that provides a route with the highest data rate shall provide relay assistance, which route is from the second wireless device via the candidate to the network node if that candidate provides a route that has higher data rate than a route from the second wireless device (122) direct to network node, based on the reported pathloss.

According to a third aspect, the object is achieved by a method in a first wireless device for handling relay assistance for a second wireless device in a wireless network wherein the first wireless device is served by or is camping on a network node, as defined in claim 8. The first wireless device measures on reference signals from the network node, one or more out of a Reference Signal Received Power, RSRP, Reference Signal Received Quality, RSRQ, and Received Signal Strength Indicator, RSSI, and receives a first beacon signal from the second wireless device, which first beacon signal comprises information about preferred relay types of the *second* wireless device and which first beacon signal advertises that the second wireless device needs relay assistance in a radio communication, and/or the first wireless device sends a second beacon signal to be received by the second wireless device when any one of the RSRP, RSSI, and/or RSRQ measurements exceed a threshold, which second beacon signal comprises information about any one or more out of: link quality and/or signal strength to serving network node, relaying capability of the first wireless device and which second beacon signal advertises that the first wireless device has capability to provide relay assistance in accordance with the preferred relay types, in a radio communication in the wireless network. The first wireless device then configures a Device to Device, D2D, bearer between the first wireless device and the second wireless device based on the first beacon signal and/or the second beacon signal. This enables said radio communication to be performed via the D2D bearer wherein the first wireless device acts as a relay node.

According to a fourth aspect, the object is achieved by a second wireless device for handling relay assistance from a first wireless device in a wireless network wherein the second wireless device is served by or is camping on a network node. The second wireless device is configured to perform the method according to the first aspect

According to a fifth aspect, the object is achieved by a network node for handling relay assistance by a first wireless device to a second wireless device in a wireless network. The second wireless device needs relay assistance in a radio communication. The network node is configured to perform the method according to the second aspect.

According to a sixth aspect, the object is achieved by a first wireless device for handling relay assistance for a second wireless device in a wireless network, wherein the first wireless device is served by or is camping on a network node. The first wireless device is configured to perform the method according to the third aspect.

Further embodiments are according to the dependent claims.

Since beacon signals are signalled by the first wireless device and/or the second wireless device , advertising that the first wireless device has capability to provide relay assistance, and/or that the second wireless device needs relay assistance, a helping device such as the first wireless device can be identified of act as a relay node for the second wireless device. In this way the way of handling relay assistance between wireless devices has been improved.

### DETAILED DESCRIPTION

As part of developing embodiments herein, a problem will first be identified and discussed.

As mentioned above, due to the evolving D2D technology and relaying capabilities of UEs i.e. wireless devices, D2D technology has the potential to improve the cellular coverage and enhance data rates of cell edge wireless devices. So far D2D technology development has, however, primarily been focused on data transfers between two wireless devices, and not on the situation when D2D communication is used in the form of relaying to improve the communication between a wireless device and an access point such as a base station.

Consequently, existing neighbor discovery techniques do not allow a wireless device to find other wireless devices with specific relaying capabilities and willingness to help;
- Existing neighbor discovery techniques do not allow wireless devices to advertise their capabilities, and in particular the relaying capabilities, and willingness to assist cell edge wireless devices, as well as cell edge wireless devices cannot advertise their need for assistance;
- Existing bearer establishment and D2D pairing algorithms do not facilitate the selection of wireless devices in a geographic proximity of a given wireless device based on their capabilities, current radio conditions and willingness to assist the cell edge wireless devices;

In short, existing technologies do not provide support for neighbor discovery and D2D communications for the specific purpose of improving the cell edge performance in cellular networks.

In network assisted D2D communications, a fundamental problem is mode selection that has the task to decide on which mode two wireless devices residing in the same cell or neighboring cells should communicate with one another. According to embodiments herein, this general problem is broken down and extended to the following two sub-problems.

### Problem 1:

How should a given help needing wireless device and/or the cellular network find, i.e. identify, helper wireless devices in the said cellular network that are capable of and willing to provide proper relaying functionality to assist the said help needing wireless device in the said cellular network in order to improve coverage, increase cell edge bit rate, and/or reduce the amount of retransmissions of the help needing wireless device?

### Problem 2:

How to allow the help needing wireless device that has found such helper, i.e. wireless devices willing to relay, to select a subset, possibly only one, out of the helper wireless devices, identified in Problem 1, to actually provide the relaying functionality for the cell edge wireless devices?

In this problem, an underlying hidden related problem is the issue of how to select and configure the type of relaying between the selected helper wireless device and the cellular network's access point or Base Station/network node (BS/eNB).

A concept of some embodiments herein is to use a combination of special advertising and network assistance to solve Problem 1 and Problem 2 above and in particular to facilitate relaying assistance by one helper UE to another UE in the same cell.

According to some embodiments herein, a D2D mode selection comprises three steps: advertising, network assisted matching and D2D bearer configuration.

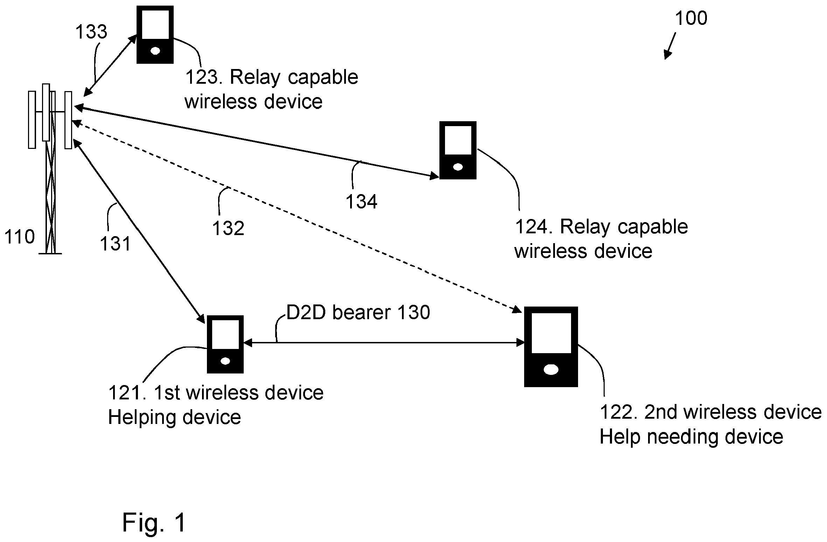

A helper UE is referred to as a first wireless device 121 in embodiments herein. The UE being helped is referred to as a second wireless device 122 herein. The first wireless device 121 and the second wireless device 122 will be described with reference to Figure 1 below. During advertising, D2D Capable UEs such as a first wireless device 121 may use a periodic beaconing procedure to advertise their relaying and D2D capabilities as well as a summary of their current radio measurements related to the current serving cell e.g. based on Reference Signal Received Power (RSRP) and Received Signal Strength Indicator (RSSI), to let other UEs such as the second wireless device 122, in their neighborhood, e.g. up to a couple of 100 meters, learn that they are capable of and willing of acting as transparent or regenerative relay, e.g. Amplify-Forward, Decode-Forward,... nodes to other UEs such as the second wireless device 122. D2D Capable UEs such as the second wireless device 122, that experience low Signal to Interference plus Noise Ratio (SINR) and high path loss, use a periodic beaconing procedure to advertise the need for relaying assistance, optionally also advertising the type of help they need, e.g. increase bit rate or preserve coverage or reduce retransmissions.

During the matching step, UEs that identified each other as helpers and UEs that need help respectively such as the first wireless device 121 and the second wireless device 122 may use network assistance to establish D2D communications in cellular spectrum. In this matching step the UEs and the NW such as the network node 110 may have different roles, but according to embodiments herein, there is an interplay between the NW and the involved UEs.

After proper bearer configuration, the assisting UE(s) such as the second wireless device 122 takes part in the transmission phase of the communication to improve the effective overall link quality. The bearer configuration has the responsibility to properly select relaying modes and set associated parameters for the particular relay mode.

**Figure 1** depicts a **wireless communications network 100** in which embodiments herein may be implemented. In some embodiments the wireless communications network 100 may be a communication network such as an LTE (e.g. LTE FDD, LTE TDD, LTE), WCDMA, UTRA TDD, GSM network, Enhanced Data Rate for GSM Evolution (EDGE) network, GSM EDGE Radio Access Network (GERAN) network, High Speed Packet Access (HSPA), Wireless Local Area network (WLAN), any network comprising of any combination of RATs such as e.g. Multi-Standard Radio (MSR) base stations, multi-RAT base stations etc., any 3GPP cellular network, Wimax, or any cellular network or system.

The wireless communications network 100 comprises a **network node 110,** which network node 110 in some embodiments serves the first wireless device 121 and the second wireless devices 122. The network node 110 may be a radio base station such as e.g. an eNB, an eNodeB, or a Home Node B, a Home eNode B or any other network node or access point capable to serve a wireless device such as a user equipment and/or a machine type communication device in a wireless communications network. Please note that the network node 110 is also referred to as the network, the NW, the Base Station, the BS, or the eNB in this document.

A number of wireless devices are located in the wireless communications network 100. In the example scenario of Figure 1, the **first wireless device 121** and the **second wireless device 122,** are located in the wireless communications network 100. The wireless communications network 100 further comprises **one or more further wireless devices 123, 124,** in the example scenario of Figure 1, two wireless devises are shown. The first wireless device 121, the second wireless device 122 and the one or more further wireless devices 123, 124 are capable to communicate using D2D communication. The first wireless device 121 may e.g. communicate with the second wireless device 122 using D2D communication over a **D2D bearer 130.** The first wireless device 121 is adapted to communicate with the network node 110 over a **first radio link 131.** The second wireless device 122 is adapted to communicate with the network node 110 over a **second radio link 132.** The one or more further devices 123, 124 are adapted to communicate with the network node 110 over one or more respective **radio links 133, 134.** As mentioned above, the helper UE that is capable of acting as a relay node is referred to as the first wireless device 121 and the UE being helped, i.e. that need relay assistance is referred to as the second wireless device 122 herein. The one or more further wireless devices 123, 124 are D2D capable and capable of acting as relay nodes and may be candidates to help the first wireless device 121.

The first wireless device 121, the second wireless device 122, and the one or more further wireless devices 123, 124 may e.g. be mobile terminals or wireless terminals, mobile phones, computers such as e.g. laptops, Personal Digital Assistants (PDAs) or tablet computers, sometimes referred to as surf plates, with wireless capability, Machine to Machine (M2M) devices or any other radio network units capable to communicate over a radio link in a communications network.

### Embodiments of a method seen from the second device 122 view

Firstly, in Figure 2, embodiments of a method will be described when seen from the second wireless device 122 view. Afterwards, embodiments of the method when seen from the first wireless device 121 view (Figure 4) and embodiments of the method when seen from the network node 110 view (Figure 6) will be described.

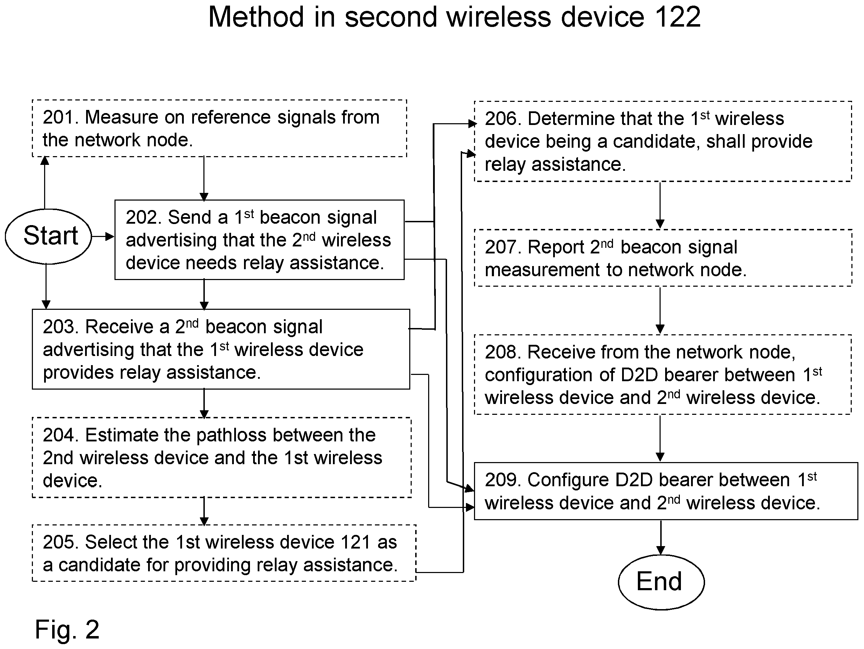

Thus, example of embodiments of a method in a second wireless device 122 for handling relay assistance from a first wireless device 121 in a wireless network 100 will now be described with reference to a flowchart depicted in **Figure 2****.** According to an example scenario, the second wireless device 122 is served by or is camping on the network node 110, and is communicating with the network node 110 over the radio link 132. The second device 122, is the device that seeks for help. The method comprises the following actions, which actions may be taken in any suitable order. Dashed lines of some boxes in Figure 2 indicate that this action is not mandatory.

### Action 201

This action is optional .The second wireless device 122 checks the quality such as Quality of service (QoS) of the radio link 132. When the second wireless device 122 finds or believes that the link quality is getting poor, it realises that it would be helped if any wireless device in the neighbour of the second wireless device 122, having better link quality could act as a relay node. To check the quality of the radio link 132, the second wireless device 122 may measure on reference signals from the network node 110. These signals may be one or more out of a RSRP, Reference Signal Received Quality (RSRQ) and RSSI.

### Action 202

The method comprises at least one of Action 202 and 203, i.e. it may in some embodiments also comprise both Action 202 and 203.

When the second wireless device 122 needs relay assistance, it may send a **first beacon signal** to the first wireless device 121. The first beacon signal advertises that the second wireless device 122 needs relay assistance in a radio communication. The first beacon signal is broadcasted so that any device, including the first wireless device 121, in the neighborhood of the second wireless device 122, i.e. in an area of radio coverage from the second wireless device 122, can receive it. This means that the first beacon signal is not specifically addressed to the first wireless device 121, but the first wireless device 121 as well as the one or more further wireless devices 123, 124 appearing in some embodiments, can hear the first beacon signal if they are located within an area of radio coverage from the second wireless device 122.

In some embodiments, this action of sending of the first beacon signal is performed when any one of the RSRP, RSSI, and/or RSRQ measurements performed in Action 201 falls below a threshold.

As mentioned above, in some embodiments needing D2D Capable UEs such as the second wireless device 122 whose RSRP, RSSI and/or RSRQ measurements indicate risk of failure, may construct a beacon signal such as the first beacon signal and start advertising its need of help. The indicated risk of failure, may e.g. be cell edge situation or risk for outage and/or Radio Link Failure (RLF) of the radio link 132. When the second wireless device 122 is located at a cell edge, the radio link 132 may be poor compared to a location of the second wireless device closer to the network node 110. Outage means that requirements of QoS of the radio link is not met.

The first beacon signal may comprise information about any one or more out of:
- preferred relay types of the second wireless device 122, e.g. type of relay such as AF, LF, DF, CF, EF, or GF. See definitions in the end of the description.
- incentive of assisting the second wireless device 122,
- type of help needed by the second wireless device 122, such as e.g. type of relay assistance the second wireless device 122 is looking for. Further, e.g. purpose of help that the second wireless device 122 is looking for, e.g. improve Bit Error rate (BER) of system information, improve downlink/uplink bit rate, reduce uplink transmit power, improve uplink Hybrid Automatic Repeat reQuest (HARQ), performance;
- If available position information of the second wireless device 122.
- If available velocity information of the second wireless device 122.
- UE capability information of the second wireless device 122.
- group identity of the second wireless device 122, such as Groups IDs in which the second wireless device is a member of, e.g. Buddy List or Social Network Group it belongs to. /What is a Buddy list?
- Home operator and/or visited operator of the second wireless device 122.
- Estimated downlink and uplink data rates from/to the access point, such as e.g. the network node 110.
- Incentive that the second wireless device 122 is willing to provide to the helping device to get relaying assistance from the helper device such as e.g. content, charging reduction (that is the help needing device is willing to be charged for getting help which charge can reduce the charges imposed on the helper device), or indication of willingness of helping the helping device at a future possible occasion.

The second wireless device 122 may also send a registration message to the network node 110 in connected mode, or to a Mobility Management Entity (MME) in a Tracking Area (TA) when being in idle mode with similar content as the first beacon signal.

The duty cycle of the first beacon signal may be determined by the network such as e.g. the network node 110 or be autonomously adjusted by the second wireless device 122 based on, e.g. its battery status.

### Action 203

As an alternative to or in combination with Action 202, the second wireless device 122 may receive a second beacon signal from the first wireless device 121. The second beacon signal advertises that the first wireless device 121 provides relay assistance in a radio communication in the wireless network 100.

The second beacon signal is broadcasted by the first wireless device 121 so that any device, including the second wireless device 122, in the neighborhood of the first wireless device 121, i.e. in an area of radio coverage from the first wireless device 121, can receive it. This means that the second beacon signal is not specifically addressed to the second wireless device 122, but the second wireless device 122 can hear the first beacon signal if it is located within an area of radio coverage from the first wireless device 121.

However, there may be other wireless devices in the neighbourhood of the second wireless device 122 that are capable of providing relay assistance. Therefore in some embodiments, this action further comprises receiving one or more further second beacon signals from the respective one or more further wireless devices 123,124. The respective one or more further second beacon signals advertises that the respective one or more further wireless devices 123,124 provide relay assistance in the radio communication in the wireless network 100.

The second beacon signal or signals may each comprise information about any one or more out of: link quality and/or signal strength to serving network node, relaying capability of the first wireless device 121, position information of the first wireless device 121, velocity information of the first wireless device 121, UE capability information of the first wireless device 121, group identity of the first wireless device 121, home operator of the first wireless device 121, visited operator of the first wireless device 121.

### Action 204

This action is optional. The second wireless device 122 may have sent the first beacon signal and received an answer to the first beacon signal from the first device 121 and/or the other wireless devices 123, 124 that it/they may provide relay assistance to the second wireless device 122. As an alternative or as combined, the second wireless device 122 may have heard the second beacon signal from the first wireless device 121 and/or the other second beacon signals from the respective other wireless device 123, 124. So by sending first beacon signals or by receiving second signals the second wireless device 122 may have identified candidates, such as the first wireless device 121, and/or the respective other wireless device 123, 124, that may provide relay assistance to the second wireless device 122.

According to some embodiments, to see if the first wireless device 121 offers better route to the network node 110 then the route from the second wireless device 122 direct to the network node 110, the second wireless device 122 may estimate the pathloss between the second wireless device 122 and the first wireless device 121 on the second beacons signal. The second wireless device 122 may further estimate the pathloss between second wireless device 122 and the network node 110.

Pathloss is the signal attenuation between a transmitter and a receiver. The pathloss to the first wireless device 121 may be estimated e.g. based on RSRP and/or RSSI measurements, and the pathloss to the network node 110 may be estimated e.g. based on RSRP and/or RSSI measurements on a reference signal sent by the network node 110.

In some embodiments, the second wireless device 122 have received second beacon signals from multiple wireless devices providing relay assistance. In one example, the second wireless device 122 have received second beacon signals from the first wireless device 121, and the one or more further wireless devices 123,124. To have a base for selecting the wireless device that offers the best relay in these embodiments, the second wireless device 122 may further estimate the pathloss between the second wireless device 122 and the respective one or more further wireless devices 123,124 on the respective second beacons signals,

This means that in this specific example the second wireless device 122 estimates:
- the pathloss between second wireless device 122 and the network node 110,
- the pathloss between second wireless device 122 and the first wireless device 121,
- the pathloss between second wireless device 122 and the wireless device 123, and
- the pathloss between second wireless device 122 and the wireless device 124.

The different wireless devices 121, 123, 124 may be entered into a list of candidates offering relay assistance.

### Action 205

This action is optional. According to some embodiments, when the estimated pathloss between the second wireless device 122 and the first wireless device 121 is lower compared to the estimated pathloss between the second wireless device 122 and the network node 110, the second wireless device 122 selects the first wireless device 121 as a candidate for providing relay assistance.

In the embodiments wherein the second wireless device 122 have received second beacon signals from multiple wireless devices providing relay assistance, when the estimated pathloss between the second wireless device 122 and any of the respective first wireless device 121 and/or one or more further wireless devices 123,124 are lower compared to the estimated pathloss between the second wireless device 122 and the network node 110, the second wireless device 122 selects these any of the respective first wireless device 121 and/or one or more further wireless devices 123,124 as a respective candidate 121, 123, 124 for providing relay assistance.

This means that the second wireless device 122 selects any wireless device that offers a better route than the direct route between the second wireless device 122 and the network node 110 as a candidate for providing relay assistance. These are kept in the candidate list.

The second wireless device 122 removes any wireless device that offers a worse route than the direct route between the second wireless device 122 and the network node 110, from the candidate list. The results of the measured pathloss and/or the candidate list may be reported to network node 110, see below.

### Action 206

This action is optional, since in some embodiments the determination of which wireless device that shall be acting as the relay node, may be performed by second wireless device 122 or in some other embodiments, the determination is made by the network node 110. The latter will be described below.

Therefore in some embodiments, the second wireless device 122 determines that the first wireless device 121 being a candidate, shall provide relay assistance, if the candidate provides a route, from the second wireless device 122 via the candidate to the network node 110, that has higher data rate than a route from the second wireless device 122 direct to network node 110.

In the embodiments wherein the second wireless device 122 have received second beacon signals from multiple wireless devices providing relay assistance, the candidates may be any of the first wireless device 121 or the other wireless devices 123, 124, referred to as candidates 121, 123, 124. In these embodiments, the second wireless device 122 determines that the candidate 121, 123, 124 that provides a route with the highest data rate shall provide relay assistance, which route is from the second wireless device 122 via the candidate 121, 123, 124 to the network node 110, if that candidate 121, 123, 124 provides a route that has higher data rate than a route from the second wireless device 122 direct to network node 110. From the beacon signal the second wireless device 122 knows the first wireless device 121's pathloss and/or data rate to the network, this may be referred to as r1. From the pathloss to the first wireless device 121 the second wireless device 122 can estimate the data rate to/from the first device, this may be referred to as r2. The data rate to the network can then, e.g., be estimated as r = min(r1, r2) / 2. This means that in this specific example, to determine which candidate that shall act as a relay node, the second wireless device 122 compares the data rate, such as the effective data rate between the second wireless device 122 and:
- the network node 110 direct,
- the network node 110 via the first wireless device 121,
- the network node 110 via the wireless device 123, and
- the network node 110 via the wireless device 124.

The effective data rate is the data rate that can be achieved over the two-hop link, i.e., when transmitting via the relay node. Note that here the packet is first transmitted over the first hop, then over the second hop. In this example, it is decided that first wireless device 121 shall act as a relay node since it offers the best data rate.

### Action 207

This is an optional action. The second wireless device 122 may send a report to the network node 110. The report comprises a measurement of the second beacon signal, which measurement is performed by the second wireless device 122.

The report to the network node 110 may comprise a pathloss between the second wireless device 122 and the one or more candidates for providing relay assistance.

I.e. in some embodiments, the report to the network node 110 may comprise the pathloss between the second wireless device 122 and the respective candidates for providing relay assistance, for example the first wireless device 121, and the one or more other wireless devices 123, 124.

As mentioned above, in some embodiments, the determination of which wireless device that shall be acting as the relay node is performed by the network node 110. This report may be sent in these embodiments, but it may also be sent in embodiments wherein the determination of which wireless device that shall be acting as the relay node is performed by second wireless device 122.

### Action 208

This is an optional action.

As mentioned above, In this example, it was decided that first wireless device 121 shall act as a relay node since it is assumed that it offers the best data rate.

Before configuring a D2D bearer 131 between the first wireless device 121 and the second wireless device 122 is performed, the configuration may be determined by the second wireless device 122 or the network node 110. In the case wherein the network node 110 has determined the configuration the second wireless device 122 may receive from the network node 110, the configuration of the D2D bearer 131 between the first wireless device 121 that will act as relay node, and the second wireless device 122, enabling said communication to be performed via the D2D bearer 131.

### Action 209

The second wireless device 122 configures the D2D, bearer between the first wireless device 121 and the second wireless device 122 which originally, as can be seen from the above, is based on the first beacon signal and/or the second beacon signal, enabling said communication to be performed via the D2D bearer 131 wherein the first wireless device 121 acts as a relay node.

The D2D bearer configuration means determining which physical resource blocks the second device 122 should use for data transmission and which physical resource blocks the first device 121 should use for decoding signals that the first device receives on the said physical resource blocks. In other words, the configuration of the D2D bearer means the allocation of physical resources that the second and first devices 121, 122 use for data communication. The configuration also means to associate certain parameters with the allocated physical resources, such as the maximum allowed transmit power that the second device 122 is allowed to use. The configuration of the D2D bearer in terms of physical resources and associated parameters is done by the cellular base station such as the network node 110, using the measurement reports provided by the second wireless device 122 and the first wireless device 121 and employing existing D2D bearer configuration algorithms. The "determination" means deciding which physical resource blocks and parameters should be used, (done by the network node 110), whereas the actual configuration based on the determination is done by the first and second wireless devices 121, 122 themselves.

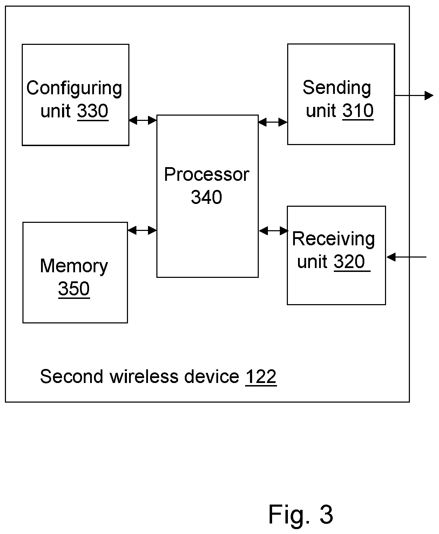

To perform the method actions for for handling relay assistance from the first wireless device 121 in the wireless network 100, described above in relation to Figure 2, the second wireless device 122 comprises the following arrangement depicted in **Figure 3****.**

The second wireless device 122 comprises at least one of a sending unit 310 and a receiving unit 320.

The **sending unit 310** is adapted to send a first beacon signal to the first wireless device 121. The first beacon signal advertises that the second wireless device 122 needs relay assistance in a radio communication.

The first beacon signal may be adapted to comprise information about any one or more out of: preferred relay types of the second wireless device 122, incentive of assisting the second wireless device 122, type of help needed by the second wireless device 122, position information of the second wireless device 122 , velocity information of the second wireless device 122, UE capability information of the second wireless device 122, group identity of the second wireless device 122, Home operator and/or visited operator of the second wireless device 122.

In some embodiments, the second wireless device 122 is served by the network node 110. The sending unit 310 may further be adapted to send a report to the network node 110. The report comprises a measurement of the second beacon signal. The measurement is performed by the second wireless device 122.

In some embodiments, the sending unit 310 further is adapted to send a report to the network node 110, which report comprises the pathloss between the second wireless device 122 and the candidate for providing relay assistance.

The sending unit 310 may further be adapted to send a report to the network node 110, which report comprises the pathloss between the second wireless device 122 and the respective candidates 121, 123, 124 for providing relay assistance.

The **receiving unit 320** is adapted to receive a second beacon signal from the first wireless device 121. The second beacon signal advertises that the first wireless device 121 provides relay assistance in a radio communication in the wireless network 100.

The second beacon signal is adapted to comprise information about any one or more out of: link quality and/or signal strength to serving network node, relaying capability of the first wireless device 121, position information of the first wireless device 121, velocity information of the first wireless device 121, UE capability information of the first wireless device 121, group identity of the first wireless device 121, home operator of the first wireless device 121, visited operator of the first wireless device 121.

The receiving unit 320 may further be adapted to receive from the network node 110, the configuration of the D2D bearer 131 between the first wireless device 121 and the second wireless device 122, enabling said communication to be performed via the D2D bearer 131.

The receiving unit 320 may further be adapted to estimate the pathloss between the second wireless device 122 and the first wireless device 121 on the second beacon signal, and to estimate the pathloss between second wireless device 122 and the network node 110.

The receiving unit 320 may further be adapted to receive one or more further second beacon signals from respective one or more further wireless devices 123,124. The respective one or more further second beacon signals advertises that the respective one or more further wireless devices 123,124 provide relay assistance in the radio communication in the wireless network 100.

In some embodiments the receiving unit 320 further is adapted estimate the pathloss between the second wireless device 122 and the respective one or more further wireless devices 123,124 on the respective second beacons signals.

The second wireless device 122 further comprises a **configuring unit 330** adapted to configure a D2D bearer between the first wireless device 121 and the second wireless device 122 based on the first beacon signal and/or the second beacon signal. This enables said communication to be performed via the D2D bearer 131 wherein the first wireless device 121 acts as a relay node.

In some embodiments, the second wireless device 122 is adapted to be served by or is camping on a network node 110. In these embodiments the receiving unit 320 may further be adapted to measure on reference signals from the network node 110, one or more out of a Reference Signal Received Power, RSRP, Reference Signal Received Quality, RSRQ, and Received Signal Strength Indicator, RSSI. In these embodiments, the sending unit 310 may further be adapted to send the first beacon signal when any one of the RSRP, RSSI, and/or RSRQ measurements falls below a threshold.
the second wireless device 122 further comprises a **processor 340** adapted to select the first wireless device 121 as a candidate for providing relay assistance, when the estimated pathloss between the second wireless device 122 and the first wireless device 121 is lower compared to the estimated pathloss between the second wireless device 122 and the network node 110.

The processor 340 may further be adapted to determine that the first wireless device being a candidate shall provide relay assistance, if the candidate provides a route, from the second wireless device 122 via the candidate to the network node 110, that has higher data rate than a route from the second wireless device 122 direct to network node 110.

The processor 340 may further be adapted to select any of the respective first wireless device 121 and/or one or more further wireless devices 123,124 as a respective candidate 121, 123, 124 for providing relay assistance, when the estimated pathloss between the second wireless device 122 and any of the respective first wireless device 121 and/or one or more further wireless devices 123,124 are lower compared to the estimated pathloss between the second wireless device 122 and the network node 110.

In some embodiments, the processor 340 further is adapted to determine that the candidate 121, 123, 124 that provides a route with the highest data rate shall provide relay assistance, which route is from the second wireless device 122 via the candidate 121, 123, 124 to the network node 110, if that candidate 121, 123, 124 provides a route that has higher data rate than a route from the second wireless device 122 direct to network node 110.

### Embodiments of a method seen from the first device 121 view

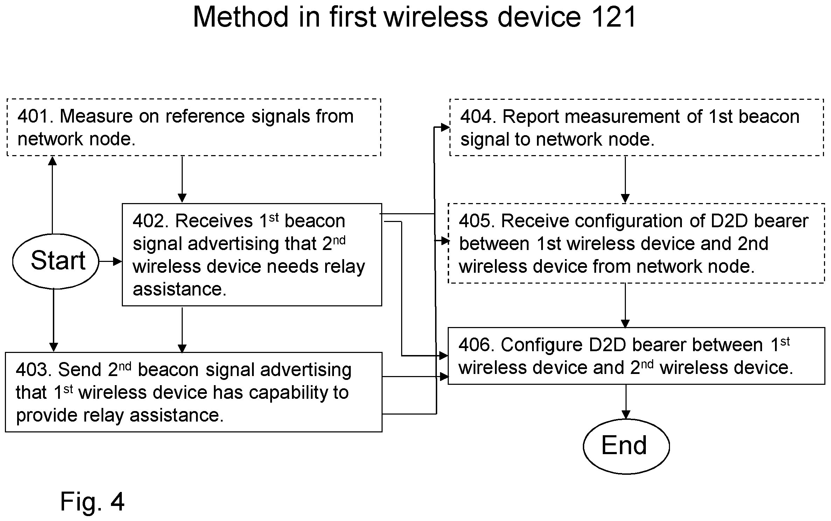

Here, embodiments of the method when seen in view of the first wireless device 121, i.e. the helping device will be described. Thus, example of embodiments of a method in the first wireless device 121 for handling relay assistance for the second wireless device 122 in the wireless network 100 will now be described with reference to a flowchart depicted in **Figure 4****.** In some embodiments, the first wireless device 121 is served by or is camping on a network node 110. The method comprises the following actions, which actions may be taken in any suitable order. Dashed lines of some boxes in Figure 4 indicate that this action is not mandatory.

### Action 401

The first wireless device 121 may measure on reference signals from the network node 110, one or more out of a RSRP, RSRQ, and RSSI.

This is useful since, before advertising that the first wireless device 121 is capable of acting as a relay node for any wireless device in the neighbourhood, or before listening to beacon signals from help needing UEs, the first wireless device 121 may check the quality of its wireless connection to its serving base station such as the network node 110, to see if it is capable of acting as a relay node. If it is, this may trigger advertising by sending of second beacon signals in Action 403 or it may triggering to listen for first beacon signals received in Action 402.

### Action 402

For example, D2D Capable UEs such as the first wireless device 121 whose RSRP, RSRQ, and RSSI measurements exceeds a preconfigured threshold and are willing to and capable of providing relaying assistance, may start listening to beacons by UEs such as the second wireless device 122 that advertise their need for relaying assistance.

Therefore, in some embodiments, the first wireless device 121 hears, i.e. receives a first beacon signal from the second wireless device 122. The first beacon signal advertises that the second wireless device 122 needs relay assistance in a radio communication.

The first beacon signal may comprises information about any one or more out of:
- preferred relay types of the second wireless device 122,
- incentive of assisting the second wireless device 122,
- type of help needed by the second wireless device 122,
- position information of the second wireless device 122,
- velocity information of the second wireless device 122,
- UE capability information of the second wireless device 122,
- group identity of the second wireless device 122, and
- Home operator and/or visited operator of the second wireless device 122.

### Action 403

Further, the first device 121 may advertise to D2D capable wireless devices such as the second wireless device 122, in the neighbourhood that it has capability to provide relay help, i.e. relay assistance. In some embodiments, the first wireless device 121 sends a second beacon signal to be received, and decoded by the second wireless device 122. The second beacon signal advertises that the first wireless device 121 has capability to provide relay assistance in a radio communication in the wireless network 100.

As mentioned in Action 401, D2D Capable UEs such as e.g. the first wireless device 121 may regularly measure RSRP and RSSI, and may implicitly also measure RSRQ. In some embodiments, when the RSRP, RSRQ, and RSSI measurements performed in Action 401 exceed a preconfigured threshold, i.e. the radio link to the network node 110 has enough or good quality, these UEs may construct the second beacon signal and start advertising. Therefore the sending of the second beacon signal may be performed when any one of the RSRP, RSSI, and/or RSRQ measurements exceeds a threshold. For example when the measured or estimated uplink path loss from the helper UE, i.e. the first wireless device 121 to the serving base station, such as the network node 110, is less than 120 dB, the first wireless device 121 can declare itself as a potential helper capable wireless device. This threshold value in general depends on other components of the wireless device's uplink link budget, transmit power headroom and other factors generally well known for the person skilled in the art.

The second beacon signal may comprise information about any one or more out of:
- Link quality and/or signal strength to serving network node, such as the quality of the radio link they currently have to their serving Base Station (BS) such as the network node 110 in connected mode or the BS they are currently camping on in idle mode. This information may be encoded into e.g. 8 levels, 3 bits.
- Relaying capability of the first wireless device 121, The relaying capability they may provide such as e.g. any of AF, LF, DF, CF, EF or GF, see definitions in the end of the description. This information may be encoded into e.g. 4 bits.;
- Position information of the first wireless device 121, if available. The position information may be based on 3GPP or GPS technology and coordinates.
- Velocity information of the first wireless device 121, if available.
- Other UE capability information of the first wireless device 121, such as e.g. available Radio Access Technologies (RATs) for example LTE, HSPA, and Wireless Local Area network (WLAN).
- Estimated downlink and uplink data rates from and/or to the access point.
- Group identity of whom it the first wireless device 121 is willing to provide relay assistance such as for example all UEs, UEs belonging to a Specific Buddy List, or only non-roaming UEs, i.e. UEs served by the Home Operator.
- Home operator of the first wireless device 121.
- Visited operator of the first wireless device 121.
- D2D capability
- incentive it requires

The duty cycle of the second beacon signal may be determined by the network such as e.g. the network node 110 or be autonomously adjusted by the first wireless device 121 based on, e.g. its battery status.

The first wireless device 121 may also send a registration message to a BS such as the network node 110, in connected mode, or to a MME in a TA in idle mode with similar content as in the second beacon signal described above.

### Action 404

In some embodiments the first wireless device 121 is served by the network node 110. In these embodiments the first wireless device 121 may send a report to the network node 110, which report comprises a measurement of the first beacon signal such as a pathloss measurement, which measurement is performed by the first wireless device 121. This may be used by the network node 110 to decide if the first wireless device shall act as relay node. This measurement as performed by the first wireless device 121 and reported to the network node 110, allows the network node 110 to estimate the link quality between the second wireless device 122 and the first wireless device 121 and thereby determine if the first wireless device 121 can provide relaying assistance to the second wireless device 122. For example, if the radio link between the second wireless device 122 and first wireless device 121 is too weak, then the first wireless device 121 cannot decode the signals sent by the second wireless device 122 and thereby the first wireless device 121 cannot act as a helper device.

### Action 405

The first wireless device 121 may receive from a network node 110 in the wireless network 100, the configuration of the D2D bearer 131 between the first wireless device 121 and the second wireless device 122 , enabling said communication to be performed via the D2D bearer 131

### Action 406

The first wireless device 121 configures the D2D bearer 131 between the first wireless device 121 and the second wireless device 122 based on the first beacon signal and/or the second beacon signal, enabling said radio communication to be performed via the D2D bearer 131 wherein the first wireless device 121 acts as a relay node.

The first wireless device 121 may have sent the second beacon signal and received an answer to the second beacon signal from the second device 122, that the second wireless device 122 need relay assistance from the first wireless device 121. As an alternative or as combined, the first wireless device 121 may have heard the first beacon signal from the second wireless device 122. In these ways the first wireless device 121 may have identified that the second wireless device 122, need relay assistance from the first wireless device 121. It may therefore configure the D2D bearer 131 between the first wireless device 121 and the second wireless device 122 based on this and by the received configuration from the network node 110 in Action 405.

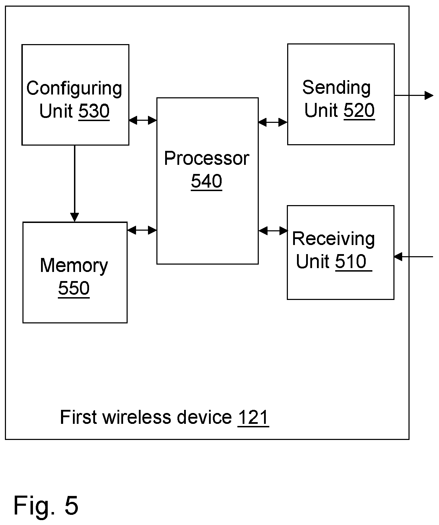

To perform the method actions for handling relay assistance for a second wireless device 122 in a wireless network 100 described above in relation to Figure 4, first wireless device 121, comprises the following arrangement depicted in **Figure 5****.**

The first wireless device 121 comprising at least one of a receiving unit 510 and a sending unit 520.

The **receiving unit 510** is adapted to receive a first beacon signal from the second wireless device 122. The first beacon signal advertises that the second wireless device 122 needs relay assistance in a radio communication.

The first beacon signal may comprise information about any one or more out of: preferred relay types of the second wireless device 122, incentive of assisting the second wireless device 122, type of help needed by the second wireless device 122, position information of the second wireless device 122, velocity information of the second wireless device 122, UE capability information of the second wireless device 122, group identity of the second wireless device 122, Home operator and/or visited operator of the second wireless device 122.

The receiving unit 510 may further be adapted to receive from a network node 110 in the wireless network 100, the configuration of the D2D bearer 131 between the first wireless device 121 and the second wireless device 122, enabling said communication to be performed via the D2D bearer 131.

In some embodiments, the first wireless device 121 is served by or is camping on the network node 110. In these embodiments, the receiving unit 510 may further be adapted to measure on reference signals from the network node 110, one or more out of a Reference Signal Received Power, RSRP, Reference Signal Received Quality, RSRQ, and Received Signal Strength Indicator, RSSI.

The **sending unit 520** is adapted to send a second beacon signal to be received by the second wireless device 122. The second beacon signal advertises that the first wireless device 121 has capability to provide relay assistance in a radio communication in the wireless network 100.

The second beacon signal may comprise information about any one or more out of: link quality and/or signal strength to serving network node, relaying capability of the first wireless device 121, position information of the first wireless device 121, velocity information of the first wireless device 121, UE capability information of the first wireless device 121, group identity of whom the first wireless device 121 is willing to provide relay assistance, home operator of the first wireless device 121, visited operator of the first wireless device 121.

In some embodiments, the first wireless device 121 is served by the network node 110. In these embodiments, the sending unit 520 may further be adapted to send a report to the network node 110. The report comprises a measurement of the first beacon signal, which measurement is performed by the first wireless device 121.

The sending unit 520 may further be adapted to send the second beacon signal when any one of the RSRP, RSSI, and/or RSRQ measurements falls below a threshold.

The first wireless device 121 further comprises a **configuring unit 530** adapted to configure a D2D bearer 131 between the first wireless device 121 and the second wireless device 122 based on the first beacon signal and/or the second beacon signal. This enables said radio communication to be performed via the D2D bearer 131 wherein the first wireless device 121 acts as a relay node.

### Embodiments of a method seen from the network node 110 view

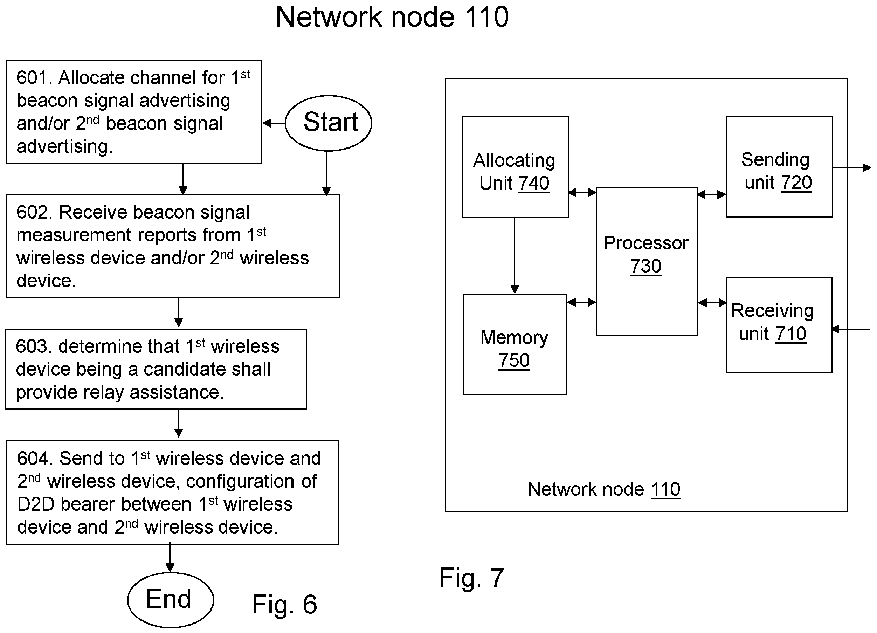

Here, embodiments of the method when seen from the network node 121 view will be described. Thus, example of embodiments of a method in a network node 110 for handling relay assistance by a first wireless device 121 to a second wireless device 122 in a wireless network 100 will now be described with reference to a flowchart depicted in **Figure 6****.** The second wireless device 122 needs relay assistance in a radio communication. The method comprises the following actions, which actions may be taken in any suitable order. Dashed lines of some boxes in Figure 6 indicate that this action is not mandatory.

### Action 601

This is an optional action.. As mentioned above, the beacon signal may comprise a first beacon signal and/or a second beacon signal.

As further mentioned above, in addition, the network (NW) such as e.g. the network node 110, may assist the matching process according to the following:
- The NW may allocate specific resources such as e.g. SubFrames (SF) and Physical resource Blocks (PRBs) for such beacon signaling such as e.g. the emergency signal channel. The emergency signal channel may be broadcast by an eNB such as the network node 110, or it may be transmitted to the UE such as the first and/or second wireless device 121, 122 as part of a registration procedure.
- The knowledge of such channels, specific SF and PRB positions, allows for fast discovery and low duty cycle , = low energy consumption, of beacons, since the UEs know which SF and PRBs they should use for beacon transmission, while the potential helper UEs know which SF and PRB they should listen to and decode to capture such beacons by UEs requesting relaying service.

D2D Capable UEs who are in or close to outage situation, listen to beacons by UEs in favorable conditions. Also, for such UEs the same logic on low duty cycle as above applies.

Therefore, in some embodiments the network node 110 allocates a channel for the first beacon signal to be sent by the second wireless device 122. The first beacon signal advertises that the second wireless device 122 requires relay assistance in a radio communication.

In some embodiments, the network node 110 further or alone allocates a channel for the second beacon signal to be sent by the first wireless device 121. The second beacon signal advertises that the first wireless device 121 is capable of providing relay assistance in a radio communication in the wireless network 100.

The duty cycle of the beacon signal may be determined by the network such as e.g. the network node 110 or be autonomously adjusted by the first and/ or second wireless device 121, 122 based on, e.g., the battery status.

### Action 602

During a NW assisted matching step, both types of UEs, i.e. the first wireless device 121 and the second wireless device 122 may perform measurements on the received beacon signals. If the beacon measurements indicate risk of failure such as e.g. low path loss, the beacon receiving UE sends back a page signal to the beacon signalling UE and optionally also to the BS such as the network node 110.

The BS such as the network node 110 may perform matching and Mode Selection (MS) i.e. whether wireless devices in the proximity of each other should communicate via a direct link or through a cellular base station or access point, for the UEs, based on:
- measurement report between the two UEs, i.e. the first wireless device 121 and the second wireless device 122.
- UE capabilities such as supported frequency bands, maximum transmit power relaying capabilities, and/or duplexing capabilities.

The matching step performed by the BS such as the network node 110 is similar to the mode selection step in traditional cellular network assisted D2D communications, but according to embodiments herein it also involves the checking of the type of relaying service requested and the type of relaying service offered.

Therefore the network node 110 may receive one or more reports from the first wireless device 121 and/or the second wireless device 122. The one or more reports comprise a respective measurement of a beacon signal sent between the first wireless device and the second wireless device.

For example, the network node 110 may receive from the second wireless device 122, a report comprising the pathloss between the second wireless device 122 and the first wireless device 121 being a candidate for providing relay assistance.

Further, the network node 110 may receive from the one or more further wireless devices 123,124, a respective report comprising the pathloss between the second wireless device 122 and respective further wireless devices 123,124 also being candidates 123, 124 for providing relay assistance.

### Action 603

Based on the reported pathloss, the network node 110 may determine that the first wireless device 121 being a candidate shall provide relay assistance, if the candidate provides a route, from the second wireless device 122 via the candidate to the network node 110, that has higher data rate than a route from the second wireless device 122 direct to network node 110.

Based on the reported pathloss, the network node 110 may determine that the candidate 121, 123, 124 that provides a route with the highest data rate shall provide relay assistance, which route is from the second wireless device 122 via the candidate 121, 123, 124 to the network node 110 if that candidate 121, 123, 124 provides a route that has higher data rate than a route from the second wireless device 122 direct to network node 110, based on the reported pathloss.

As mentioned above, In this example, it is decided that the first wireless device 121 shall act as a relay node since it is assumed to offer the best data rate.

### Action 604

If the beacon measurement report indicates sufficiently strong D2D link, and it is indicates that the UEs such as the first wireless device 121 and the second wireless device 122 relaying capabilities match, then the BS such as the network node 110 decides on D2D bearer establishment. Such bearer establishment may involve a number of relaying service specific parameters, such as e.g. any one of:
- reserving resources for the D2D link for some period, e.g., a couple of 100 ms;
- notifying UEs such as the first wireless device 121 and the second wireless device 122 about bearer establishment;
- sending configuration parameters to both the helping UE such as the first wireless device 121 and to the relay needing UE such as the second wireless device 122 .

The UEs such as the first wireless device 121 and the second wireless device 122 may continue to periodically measure and report on the quality of the D2D link to the BS so that the BS can execute MS on a periodic or event triggered basis.

Therefore when the measurement in the one or more reports exceeds the threshold, the network node 110 sends to the first wireless device 121 and the second wireless device 122, a configuration of a D2D bearer 131 between the first wireless device 121 and the second wireless device 122. This enables said communication to be performed via the D2D bearer 131 wherein the first wireless device 121 acts as a relay node.

The configuration of the D2D bearer 131 between the first wireless device 121 and the second wireless device 122 may involve one or more out of: reserving resources for the D2D link for a time period, notifying the first wireless device 121 and the second wireless device 122 about bearer 131 establishment, and/or sending configuration parameters to the first wireless device 121 and the second wireless device 122.

To perform the method actions for handling relay assistance by a first wireless device 121 to a second wireless device 122 in a wireless network 100 described above in relation to Figure 6, network node 110 comprises the following arrangement depicted in **Figure 7****.**

The network node 110 comprises a **receiving unit 710** adapted to receive one or more reports from the first wireless device 121 and/or the second wireless device 122. The one or more reports comprise a respective measurement of a beacon signal sent between the first wireless device 121 and the second wireless device 122.

In some embodiments, the receiving unit 710 further is adapted to receive from the second wireless device 122, a report comprising the pathloss between the second wireless device 122 and the first wireless device 121 being a candidate for providing relay assistance.

The receiving unit 710 may further be adapted to receive from the one or more further wireless devices 123,124, a respective report comprising the pathloss between the second wireless device 122 and respective further wireless devices 123,124 also being candidates 123, 124 for providing relay assistance.

The network node 110 further comprises a **sending unit 720** adapted to, when the measurement in the one or more reports exceeds a threshold, send to the first wireless device 121 and the second wireless device 122, a configuration of a D2D bearer 131 between the first wireless device 121 and the second wireless device 122. This enables said communication to be performed via the D2D bearer 131 wherein the first wireless device 121 acts as a relay node.

The configuration of the D2D bearer 131 between the first wireless device 121 and the second wireless device 122 may be adapted to involve one or more out of: reserving resources for the D2D link for a time period, notifying the first wireless device 121 and the second wireless device 122 about bearer 131 establishment, and/or sending configuration parameters to the first wireless device 121 and the second wireless device 122.

The network node 110 may further comprise **a processor 730.** The measurement in the one or more reports exceeding a threshold may be established by the processor 730.

The processor 730, may be adapted to, based on the reported pathloss, determine that the first wireless device 121 being a candidate shall provide relay assistance, if the candidate provides a route, from the second wireless device 122 via the candidate to the network node 110, that has higher data rate than a route from the second wireless device 122 direct to network node 110.

In some embodiments, the processor 730, may further be adapted to determine that the candidate 121, 123, 124 that provides a route with the highest data rate shall provide relay assistance, which route is from the second wireless device 122 via the candidate 121, 123, 124 to the network node 110 if that candidate 121, 123, 124 provides a route that has higher data rate than a route from the second wireless device 122 direct to network node 110 , based on the reported pathloss.

The network node 110 may further comprise an **allocating unit 740** adapted to allocate a channel for the first beacon signal to be sent by the second wireless device 122. The first beacon signal advertises that the second wireless device 122 requires relay assistance in a radio communication.

In some embodiments the allocating unit 740 is further adapted to allocate a channel for the second beacon signal to be sent by the first wireless device 121. The second beacon signal advertises that the first wireless device 121 is capable of providing relay assistance in a radio communication in the wireless network 100.

The embodiments herein for handling relay assistance may be implemented through one or more processors, such as a respective processor such as **a processor 340** in the second wireless device 122 depicted in Figure 3, a **processor 540** in the first wireless device 121 depicted in Figure 5, and/or a **processor 730** in the network node 110 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the in the first wireless device 121, the second wireless device and/or the network node 110. One such carrier may be in the form of a CD ROM disc. It is however feasible with other data carriers such as a memory stick. The computer program code may furthermore be provided as pure program code on a server and downloaded to the first wireless device 121, the second wireless device and/or the network node 110.

The first wireless device 121, the second wireless device and/or the network node 110 may further comprise a respective **memory,** such as **a memory 350** in the second wireless device 122 depicted in Figure 3, a **memory 550** in the first wireless device 121 depicted in Figure 5, and/or a **memory 750** in the network node 110 depicted in Figure 7, comprising one or more memory units. The respective memory is arranged to be used to store information about which channel to use for beacon signaling, beacon response, measurements, and/or data communication. Further to store, configurations, schedulings, and applications to perform the methods herein when being executed in the respective the first wireless device 121, the second wireless device and/or the network node 110.

Those skilled in the art will also appreciate that the respective sending unit, the receiving unit, the allocating unit, the configuring unit described above may refer to a combination of analog and digital circuits, and/or one or more processors configured with software and/or firmware, e.g. stored in the memory, that when executed by the one or more processors perform as described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The text below refers to any embodiment mentioned above.

### Advertising

According to embodiments herein, both types of UEs i.e. potential helpers such as the first wireless device 121, and UEs that need assistance such as the second wireless device may construct and broadcast beacons signals. According to some embodiments herein, a given UE at one point in time may only be broadcasting one out of the types of beacons i.e. in some embodiments, a UE may only declare itself as potential helper such as the first wireless device 121, or in need of help such as the second wireless device 122.

The NW such as the network node 110 may allocate specific resources such as e.g. subframes (SF) and PRBs for such beacon signaling, e.g. the "SOS" channel, i.e. the emergency signal. The SOS channel may be broadcast by the eNB such as the network node 110, or it may be transmitted to the UE as part of the registration procedure

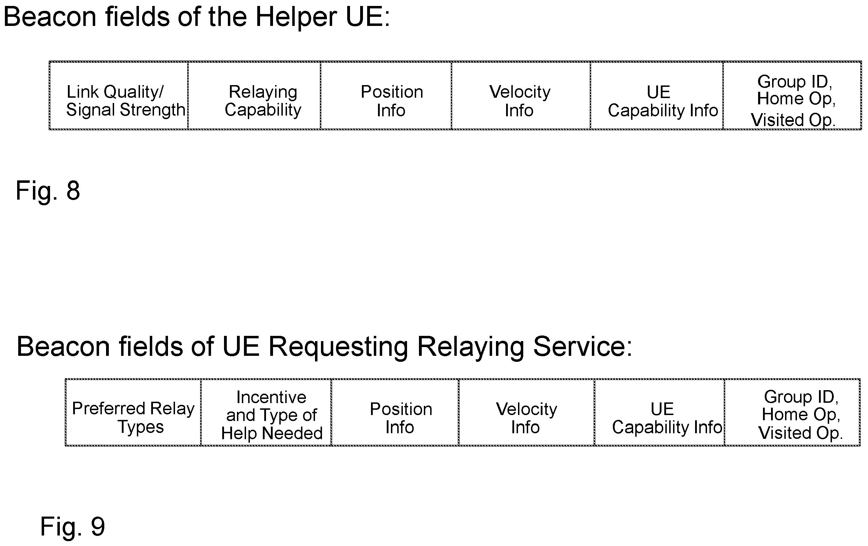

**Figure 8** depicts an example of Beacon signalling fields of a of the helper UE such as the first wireless device 121. The beacon fields of the of the second beacon signal sent by the first wireless device 121, i.e. the helper UE may comprise information about any one or more out of: Link quality/signal strength, relaying capability, position information, velocity information, UE capability information, group identity, Home operator, visited operator. There may further be a field (not shown) in the beacon signal comprising a System Frame Number (SFN) number and a Physical Resource Block (PRB) number that specifies which resources the wireless devices use to transmit and listen to for the transmission and capturing of the distress signal, i.e. the "Help Request" signal.

**Figure 9** discloses an example of Beacon signalling fields of the UE that requests a relaying help from UEs in its vicinity, such as the second wireless device 122. The Beacon fields of the first beacon signal send t by the second wireless device 122, i.e. the UE requesting help may comprise information about any one or more out of: Preferred relay types, incentive and type of help needed, position information, velocity information, UE capability information, group identity, Home operator, visited operator.

Also here, it may further be a field (not shown) in the beacon signal comprising a SFN number and a PRB number that specifies which resources the wireless devices use to transmit and listen to for the transmission and capturing of the distress signal, i.e. the "Help Request" signal.

### Example to Illustrate embodiments herein

A schematic example of embodiments herein is given to illustrate the methods explained above. In the example there is a mobile user, the second wireless device 122 (wd122) communicating with the base station, eNB such as e.g. the network node 110 (nn110). In a cell covered by the network node 110 there are also three additional wireless devices, the first wireless device 121 (wd121), and the other wireless devices 123, 124 (wd123), (wd124) out of which the first wireless device 121 and the wireless device 123 are decode-and-forward relaying capable and willing to help other wireless devices, while the wireless device 124 is not a potential helper and therefore does not participate. The concept of decode and forward relaying is described in the end of the description. As the second wireless device 122 is located out on the cell border and has a relatively poor channel to the network node 110 it might benefit from assistance from other wireless devices.

The pathloss between the network node 110 and the wireless devices are as follows:

| | |
|---|---|
| nn110 - wd122: | 137 dB |
| nn110 -wd121: | 130 dB |
| nn110 -wd123: | 124 dB |

### Advertising

The second wireless device 122, which is in need of assistance, broadcasts a beacon signal where it declares itself in need of help. The first wireless device 121 and the wireless device 123 have declared themselves as potential helpers and make this information available to other wireless devices via their beacon signals. The beacon signals also comprises other information as described in above e.g., the UEs' D2D capabilities. From RSRP measurements on the beacons signal(s) it is possible for a UE to estimate the pathloss between itself and other UEs. In this example we have the following pathloss relations between the second wireless device 122 and the two potential helpers:

| | |
|---|---|
| wd122 - wd121: | 122 dB |
| wd122 - wd123: | 138 dB |

### NW Assisted Matching

The matching may be performed in many different ways and may reside either in the network node 110, in the wireless devices such as the second wireless device 122, or in both. Here it is assumed that the second wireless device 122 performs an initial selection and then lets the network node 110 take the final matching decision. As the pathloss between the network node 110 and the second wireless device 122 is lower compared to the pathloss between the second wireless device 122 and the wireless device 123, it is not likely that the wireless device 123 can improve the communication between the second wireless device 122 and the network node 110. Hence, the second wireless device 122 removes the wireless device 123 from the candidate list. The first wireless device 121 is still considered as a potential helper and the pathloss between the second wireless device 122 and first wireless device 121 is reported to the network node 110.

The network node 110 is now aware of the pathloss relationships between the network node 110 and respective second wireless device 122 and first wireless device 121, as well as in between the two wireless devices, the first wireless device 121 and the second wireless device 122. The link rate decreases with the pathloss. To explain in a simple way, the signal-to-noise ratios (SNR) = Ptx - L - N, where Ptx is the transmission power, L is the pathloss and N is the noise. The link rate is then a function of the SNR and the bandwidth. Theoretically, the link rate = bw*log2(1+SNR). From the pathloss relationships the network node 110 may estimate the following link rates.

| | |
|---|---|
| wd122- nn110: | 0.3 Mbps |
| wd122-wd121: | 3.1 Mbps |
| wd121 - nn110: | 1.5 Mbps |

In the next step the network node 110 estimates the effective data rates between the second wireless device 122 and the network node 110 via the different candidate routes. In this example there are two possible routes, either directly from the second wireless device 122 to the network node 110 or via the first wireless device 121, i.e., first from the second wireless device 122 to the first wireless device 121 and then from the first wireless device 121 to the network node 110. When a helping decode-and-forward wireless device is involved as a relay node, it is in this example assumed that the transmission uses two slots instead of one and that the rate is limited by the link with the lowest throughput. It is first needed to transmit the data to the relay node (slot 1), then from the relay node to the network (slot 2).

| | |
|---|---|
| wd122 - nn110: | 0.3 Mbps |
| wd122 - wd121- nn110: | min(3.1, 1.5) / 2 Mbps = 0.75 Mbps, |

wherein min means minimum, i.e. lowest, and Mbps means megabits per second.

Based on this the network node determines that it should set up the transmission via the helper wireless device, i.e. the first wireless device 121.

### D2D bearer configuration and establishment

As described above, the network node 110 may configure and establish the D2D bearer.

Advantages of embodiments herein is that the problems described in the beginning of the detailed description may be solved and thereby D2D communication may be used to increase the cooperation between UEs such as the first wireless device 121 and the second wireless device 122, served by a cellular network. Specifically, the following advantages over prior art techniques are emphasized:
- UEs such as the first wireless device 121 willing to and capable of providing relaying service to other UEs such as the second wireless device 122 may actively indicate their capability and willingness and can take advantage of network such as the network node 110 assistance in their search process;
- UEs such as the second wireless device 122, that are in need of relaying assistance may actively indicate what kind of relaying services they need by a low duty cycle beaconing mechanism and can capture the beacon signals of relaying capable other UEs such as the first wireless device 121;
- By means of the proposed mechanism the network node 110 may help cell edge UEs and relaying capable UEs such as the first wireless device 121 and the second wireless device 122, to find one another and set up a D2D communication link.

All in all, the advantage of the embodiments herein is that it takes advantage of network assisted D2D communications to improve the performance of the cellular network by exploiting the capabilities of UEs such as the first wireless device 121 and the second wireless device 122, currently present in the system. Thus, operators may reduce the deployment costs associated with installing and maintaining repeater and various kinds of relaying infrastructure.

According to some embodiments,
- UE node such as the first wireless device 121 and the second wireless device 122 performing beaconing according to the proposed scheme;
- NW node such as the network node 110 performing mode selection taking into account relaying capability information;
- NW node such as the network node 110 configuring the D2D bearer such that relaying is configured dynamically according to available helper UEs and UEs that are in need of relaying service.

When using the word "comprise" or "comprising" it shall be interpreted as nonlimiting, i.e. meaning "consist at least of".

The embodiments herein are not limited to the above described preferred embodiments. Various alternatives, modifications and equivalents may be used within the scope of the appended claims.

### Abbreviations

- AF: Amplify and Forward
- CF: Compress and Forward
- CMAS: Commercial Mobile Alert System
- CR: Cooperative Relaying
- D2D: Device-to-Device
- DF: Decode and Forward
- EF: Estimate and Forward
- E-SMLC: Evolved Serving Mobile Location Server
- EWS: Earthquake and Tsunami Warning System
- GF: Gather and Forward
- GNSS: Global Navigation Satellite System
- GPS: Global Positioning System
- GMLC: Gateway Mobile Location Center
- LCS: Location Services
- LF: Linear-Process and Forward
- LTE: Long Term Evolution
- LPP: LTE Positioning Protocol
- MME: Mobility Management Entity
- nLF: Nonlinear-Process and Forward
- MSISDN: Mobile Station International Subscriber Directory Number
- NEW: Network Entity
- OFDM: Orthogonal Frequency Division Multiplexing
- OTDOA: Observed Time Difference of Arrival
- PDF: Peer Discovery Frame
- PDR: Peer Discovery Resource
- PF: Purge and Forward
- PLMN: Public Land Mobile Network (PLMN)
- PRB: Physical Resource Block
- PWS: Public Warning System
- PSS: Primary Synchronization Signal
- RAT: Radio Access Technology
- SR: Supportive Relaying
- RLF: Radio Link Failure
- RSRP: Reference Signal Received Power
- RSRQ: Reference Signal Received Quality
- RSSI: Received Signal Strength Indicator
- SSS: Secondary Synchronization Signal
- TA: Tracking Area
- UTDOA: Uplink Time Difference of Arrival

### Type of Relays and Associated Parameters Supported by the embodiments herein.

### Amplify and Forward (AF)

The signal received by AF relays is amplified, frequency translated and retransmitted.
Parameters: amplification factor, frequency translation information (e.g. frequency channels for the output signal)

### Linear Process and Forward (LF)

LF relays perform some simple linear operation, typically in the analogue domain, on the signal before retransmission. For example, it may be phase shifting that facilitates the implementation of distributed beam forming.

### Non Linear Process and Forward (nLF)

nLF relays perform some non-linear operation on the signal prior to retransmission. An example may be a nonlinear amplification of a signal that can be useful to reduce the end-to-end error rate.

### Estimate and Forward (EF)

EF relays estimate the originally transmitted signal, in the baseband, after which the EF relay retransmits the estimate possibly by using a different modulation and coding scheme. Thus, the retransmitted signal may be transmitted by an optimal modulation for the relay-BS link.

### Compress and Forward (CF)

CF relays are similar to EF relays, but CF relays can also involve some source coding technique to compress the original data stream. This may be especially useful when the compressing relay, i.e. the helper UE, is close to the BS and has favorable link quality. In which case it may, for example remove some redundancy from the original data stream without increasing the residual block error rates.

### Decode and Forward (DF)

DF relays detects the signal, decodes it and re-encodes it prior to retransmission. DF is known to be performance optimal with respect to e.g. end-to-end error rate.

### Purge and Forward (PF)

PF relays employ sophisticated interference cancellation methods to cancel as much as possible of the interference present at the receiver relay. PF may be used in combination of some other relaying techniques, such as DF.

### Gather and Forward (GF)

GF is sometimes also referred to as "Aggregate and Forward" and may be seen as an extension of the CF relaying protocol. GF may apply source coding over a large number of communication slots rather than performing source coding on the sampled information as CF does.

### Parameters Associated with Regenerative Relaying Protocols

### Choice of and Associated Parameters of Channel Code

Channel codes applicable for the relay-BS link include "no channel coding", block codes, trellis codes and the concatenations thereof. For example, trellis codes may correct with a given probability a given density of errors, e.g. an error in every 10 bits in average corrected with probability 90%. Trellis codes are a special family of convolutional codes originally applied in the context of digital communications over telephone lines (modems). Space-time trellis codes are applicable in relay assisted cellular communications as it is known for the skilled in the art person.

### Choice of Interleaver

The interleaver rearranges the output bit stream with regard to input bit stream with the purpose of breaking of long sequences of errors, so called error bursts. This can be useful in block fading environments, but needs memory at the interleaver node in order to achieve long interleaving distances.

### Choice of Waveform and Modulation

The choice of waveform and modulation involves determining whether the transmission should be single versus multicarrier, as for example in LTE UL or DL respectively. The choice of modulation may comprise a large number of parameters, for example related to coherent or differential modulation schemes. For example, in general coherent modulation outperforms differential modulation at the expense of accurate Channel State Information at the Receiver (CSIR). Differential modulation is more suitable in environments where the channel varies rapidly, in the case of the embodiments herein between the helper UE and BS).

### Choice of Space-Time Processing

If the relay node, helper wireless device, such as the first wireless device 121, has multiple antennas, then a large number of different space-time of space-frequency coding may be available at the helper UE, depending on the capabilities of the helper UE and the eNB such as the network node 110. Typically, these codes work well in rich scattered channels in order to use the full potential of the Multiple In Multiple Out (MIMO) channel.

### Power Control

Both regenerative relays and simpler relays may use different (adaptive or non-adaptive) amplification factors to manage Signal-to-Noise Ratio (SNR) and Signal-to-Interference plus Noise-Ratio (SINR) at the receiver, in the eNB such as the network node 110.

### Choice of Receiver

The choice of the receiver technique applied by the helper UE such as the first wireless device 121, depending on UE capabilities and possible some control parameters, may have a large impact on the received SINR and BLock Error Rate (BLER). These receiver techniques, e.g. Zero Forcing (ZF), Minimum Mean Square Error (MMSE), typically trade off performance with complexity, channel estimation requirements that mat be suitable indifferent fading environments.

## Claims

1. A method in a second wireless device (122) for handling relay assistance from a first wireless device (121) in a wireless network (100) wherein the second wireless device (122) is served by or is camping on a network node (110), the method comprises:
*measuring* (201) on reference signals from the network node (110), one or more out of a Reference Signal Received Power, RSRP, Reference Signal Received Quality, RSRQ, and Received Signal Strength Indicator, RSSI,
the method comprising:
*sending* (202) a first beacon signal to the first wireless device (121) when any one of the RSRP, RSSI, and/or RSRQ measurements falls below a threshold, which first beacon signal comprises information about preferred relay types of the second wireless device (122) and which first beacon signal advertises that the second wireless device (122) needs relay assistance in a radio communication,
*receiving* (203) a second beacon signal from the first wireless device (121), which second beacon signal comprises information about any one or more out of: link quality and/or signal strength to serving network node, relaying capability of the first wireless device (121) and which second beacon signal advertises that the first wireless device (121) provides relay assistance, in accordance with the preferred relay types, in a radio communication in the wireless network (100), and *configuring* (209) a Device to Device, D2D, bearer between the first wireless device (121) and the second wireless device (122) based on the first beacon signal and/or the second beacon signal, enabling said communication to be performed via the D2D bearer (131) wherein the first wireless device (121) acts as a relay node, and
*estimating* (204) the pathloss between the second wireless device (122) and the first wireless device (121) on the second beacons signal, and
*estimating* (204) the pathloss between second wireless device (122) and the network node (110),
when the estimated pathloss between the second wireless device (122) and the first wireless device (121) is lower compared to the estimated pathloss between the second wireless device (122) and the network node (110), *selecting* (205) the first wireless device (121) as a candidate for providing relay assistance.

2. The method according to claim 1, wherein the second wireless device (122) is served by a network node (110), the method further comprising:
*sending* (207) a report to the network node (110), which report comprises a measurement of the second beacon signal, which measurement is performed by the second wireless device (122).

3. The method according to any of the claims 1-2, further comprising:
*receiving* (208) from the network node (110), the configuration of the D2D bearer (131) between the first wireless device (121) and the second wireless device (122), enabling said communication to be performed via the D2D bearer (131).

4. The method according to any of the claims 1-3, wherein the **first beacon signal** further comprises information about any one or more out of: incentive of assisting the second wireless device (122), type of help needed by the second wireless device (122), position information of the second wireless device (122), velocity information of the second wireless device (122), UE capability information of the second wireless device (122), group identity of the second wireless device (122), Home operator and/or visited operator of the second wireless device (122).

5. The method according to any of the claims 1-4, wherein the **second beacon signal** further comprises information about any one or more out of: position information of the first wireless device (121), velocity information of the first wireless device (121), UE capability information of the first wireless device (121), group identity of the first wireless device (121), home operator of the first wireless device (121), visited operator of the first wireless device (121).

6. A method in a network node (110) for handling relay assistance by a first wireless device (121) to a second wireless device (122) in a wireless network (100), which second wireless device (122) needs relay assistance in a radio communication, the method comprising:
*receiving* (602) one or more reports from the first wireless device (121) and/or the second wireless device (122), which one or more reports comprise a respective measurement of a beacon signal sent between the first wireless device and the second wireless device, wherein the *receiving* (602) one or more reports comprises receiving from the second wireless device (122), a report comprising the pathloss between the second wireless device (122) and the first wireless device (121) being a candidate for providing relay assistance, and based on the reported pathloss, *determining* (603) that the first wireless device (121) being a candidate shall provide relay assistance, if the candidate provides a route, from the second wireless device (122) via the candidate to the network node (110), that has higher data rate than a route from the second wireless device (122) direct to network node (110),
wherein the beacon signal is a first beacon signal transmitted from the second wireless device (122) to the first wireless device (121), which first beacon signal comprises information about preferred relay types of the second wireless device (122) and which first beacon signal advertises that the second wireless device (122) needs relay assistance in a radio communication, or
wherein the beacon signal is a second beacon signal transmitted from the first wireless device (121) to the second wireless device (122), which second beacon signal advertises that the first wireless device (121) provides relay assistance, in accordance with the preferred relay types, in a radio communication in the wireless network (100), and
when the measurement in the one or more reports indicates sufficiently strong D2D link, *sending* (604) to the first wireless device and the second wireless device, a configuration of a Device to Device, D2D, bearer (131) between the first wireless device (121) and the second wireless device (122), enabling said communication to be performed via the D2D bearer (131) wherein the first wireless device (121) acts as a relay node providing relay assistance, in accordance with the preferred relay types, and
wherein the *receiving* (602) one or more reports further comprises receiving from the one or more further wireless devices (123,124), a respective report comprising the pathloss between the second wireless device (122) and respective further wireless devices (123,124) also being candidates (123, 124) for providing relay assistance, and
based on the reported pathloss *determining* (603) that the candidate (121, 123, 124) that provides a route with the highest data rate shall provide relay assistance, which route is from the second wireless device (122) via the candidate (121, 123, 124) to the network node (110) if that candidate (121, 123, 124) provides a route that has higher data rate than a route from the second wireless device (122) direct to network node (110).

7. The method according to claim 6, wherein the beacon signal comprises a first beacon signal and/or a second beacon signal the method further comprising:
*allocating* (601) a channel for the first beacon signal to be sent by the second wireless device (122), which first beacon signal advertises that the second wireless device (122) requires relay assistance in a radio communication, and/or
*allocating* (601) a channel for the second beacon signal to be sent by the first wireless device (121), which second beacon signal advertises that the first wireless device (121) is capable of providing relay assistance in a radio communication in the wireless network (100).

8. A method in a first wireless device (121) for handling relay assistance for a second wireless device (122) in a wireless network (100) wherein the first wireless device (121) is served by or is camping on a network node (110), the method comprises:
*measuring* (401) on reference signals from the network node (110), one or more out of a Reference Signal Received Power, RSRP, Reference Signal Received Quality, RSRQ, and Received Signal Strength Indicator, RSSI,
the method comprising:
*receiving* (402) a first beacon signal from the second wireless device (122), which first beacon signal comprises information about preferred relay types of the *second* wireless device (122) and which first beacon signal advertises that the second wireless device (122) needs relay assistance in a radio communication,
*sending* (403) a *second* beacon signal to be received by the second wireless device (122) when any one of the RSRP, RSSI, and/or RSRQ measurements exceed a threshold, which second beacon signal comprises information about any one or more out of: link quality and/or signal strength to serving network node, relaying capability of the first wireless device (121) and which second beacon signal advertises that the first wireless device (121) has capability to provide relay assistance, in accordance with the preferred relay types, in a radio communication in the wireless network (100), and
*configuring* (406) a Device to Device, D2D, bearer (131) between the first wireless device (121) and the second wireless device (122) based on the first beacon signal and/or the second beacon signal, enabling said radio communication to be performed via the D2D bearer (131) wherein the first wireless device (121) acts as a relay node.

9. The method according to claim 8, wherein the first wireless device (121) is served by a network node (110), the method further comprising:
*sending* (404) a report to the network node (110), which report comprises a measurement of the first beacon signal, which measurement is performed by the first wireless device (121).

10. A second wireless device (122) for handling relay assistance from a first wireless device (121) in a wireless network (100) wherein the second wireless device (122) is served by or is camping on a network node (110), the second wireless device (122) comprises:
a receiving unit (320) is adapted to measure on reference signals from the network node (110), one or more out of a Reference Signal Received Power, RSRP, Reference Signal Received Quality, RSRQ, and Received Signal Strength Indicator, RSSI,
the second wireless device comprising:
a sending unit (310) adapted to send a first beacon signal to the first wireless device (121) when any one of the RSRP, RSSI, and/or RSRQ measurements falls below a threshold, which first beacon signal comprises information about preferred relay types of the second wireless device (122) and which first beacon signal advertises that the second wireless device (122) needs relay assistance in a radio communication,
wherein the receiving unit (320) further is adapted to receive a second beacon signal from the first wireless device (121), which second beacon signal comprises information about any one or more out of: link quality and/or signal strength to serving network node, relaying capability of the first wireless device (121) and which second beacon signal advertises that the first wireless device (121) provides relay assistance, in accordance with the preferred relay types, in a radio communication in the wireless network (100),
wherein the second wireless device (122) further comprises a configuring unit (330) adapted to configure a Device to Device, D2D, bearer between the first wireless device (121) and the second wireless device (122) based on the first beacon signal and/or the second beacon signal, enabling said communication to be performed via the D2D bearer (131) wherein the first wireless device (121) acts as a relay node,
and wherein the receiving unit (320) further is adapted estimate the pathloss between the second wireless device (122) and the first wireless device (121) on the second beacons signal, and to estimate the pathloss between second wireless device (122) and the network node (110),
the second wireless device (122) further comprises a processor (340) adapted to select the first wireless device (121) as a candidate for providing relay assistance, when the estimated pathloss between the second wireless device (122) and the first wireless device (121) is lower compared to the estimated pathloss between the second wireless device (122) and the network node (110).

11. The second wireless device (122) according to claim 10, wherein the second wireless device (122) is served by a network node (110), and
wherein the sending unit (310) further is adapted to send a report to the network node (110), which report comprises a measurement of the second beacon signal, which measurement is performed by the second wireless device (122).

12. The second wireless device (122) according to any of the claims 10-11, further comprising:
wherein the receiving unit (320) further is adapted to receive from the network node (110), the configuration of the D2D bearer (131) between the first wireless device (121) and the second wireless device (122), enabling said communication to be performed via the D2D bearer (131).

13. A network node (110) for handling relay assistance by a first wireless device (121) to a second wireless device (122) in a wireless network (100), which second wireless device (122) needs relay assistance in a radio communication, the network node (110) comprising:
a receiving unit (710) adapted to receive one or more reports from the first wireless device (121) and/or the second wireless device (122), which one or more reports comprise a respective measurement of a beacon signal sent between the first wireless device and the second wireless device wherein the receiving unit (710) further is adapted to receive from the second wireless device (122), a report comprising the pathloss between the second wireless device (122) and the first wireless device (121) being a candidate for providing relay assistance, and
wherein the network node (110) further comprises a processor (730), and wherein the processor (730), based on the reported pathloss, is adapted to determine that the first wireless device (121) being a candidate shall provide relay assistance, if the candidate provides a route, from the second wireless device (122) via the candidate to the network node (110), that has higher data rate than a route from the second wireless device (122) direct to network node (110),
wherein the beacon signal is a first beacon signal transmitted from the second wireless device (122) to the first wireless device (121), which first beacon signal comprises information about one or more preferred relay types of the second wireless device (122) and which first beacon signal advertises that the second wireless device (122) needs relay assistance in a radio communication, or
wherein the beacon signal is a second beacon signal transmitted from the first wireless device (121) to the second wireless device (122), which second beacon signal advertises that the first wireless device (121) provides relay assistance in a radio communication in the wireless network (100), and
a sending unit (720) adapted to, when the measurement in the one or more reports indicates sufficiently strong D2D link, send to the first wireless device (121) and the second wireless device (122), a configuration of a Device to Device, D2D, bearer (131) between the first wireless device (121) and the second wireless device (122), enabling said communication to be performed via the D2D bearer (131) wherein the first wireless device (121) acts as a relay node providing relay assistance, in accordance with the preferred relay types, and
wherein the receiving unit (710) further is adapted to receive from the one or more further wireless devices (123,124), a respective report comprising the pathloss between the second wireless device (122) and respective further wireless devices (123,124) also being candidates (123, 124) for providing relay assistance, and
and wherein the processor (730), further is adapted to determine that the candidate (121, 123, 124) that provides a route with the highest data rate shall provide relay assistance, which route is from the second wireless device (122) via the candidate (121, 123, 124) to the network node (110) if that candidate (121, 123, 124) provides a route that has higher data rate than a route from the second wireless device (122) direct to network node (110), based on the reported pathloss.

14. The network node (110) according to claim 13, wherein the network node (110) further comprising an allocating unit (740) adapted to allocate
a channel for the first beacon signal to be sent by the second wireless device (122), which first beacon signal advertises that the second wireless device (122) requires relay assistance in a radio communication, and/or
a channel for the second beacon signal to be sent by the first wireless device (121), which second beacon signal advertises that the first wireless device (121) is capable of providing relay assistance in a radio communication in the wireless network (100) .

15. A first wireless device (121) for handling relay assistance for a second wireless device (122) in a wireless network (100) wherein the first wireless device (121) is served by or is camping on a network node (110), the first wireless device (121) comprises:
a receiving unit (510) adapted to measure on reference signals from the network node (110), one or more out of a Reference Signal Received Power, RSRP, Reference Signal Received Quality, RSRQ, and Received Signal Strength Indicator, RSSI
the first wireless device comprising:
the receiving unit (510) is further adapted to receive a first beacon signal from the second wireless device (122), which first beacon signal comprises information about preferred relay types of the second wireless device (122) and which first beacon signal advertises that the second wireless device (122) needs relay assistance in a radio communication,
a sending unit (520) adapted to send a second beacon signal to be received by the second wireless device (122) when any one of the RSRP, RSSI, and/or RSRQ measurements falls below a threshold, which second beacon signal comprises information about any one or more out of: link quality and/or signal strength to serving network node, relaying capability of the first wireless device (121) and which second beacon signal advertises that the first wireless device (121) has capability to provide relay assistance, in accordance with the preferred relay types, in a radio communication in the wireless network (100),
the first wireless device (121) further comprises a configuring unit (530) adapted to configure a Device to Device, D2D, bearer (131) between the first wireless device (121) and the second wireless device (122) based on the first beacon signal and/or the second beacon signal, enabling said radio communication to be performed via the D2D bearer (131) wherein the first wireless device (121) acts as a relay node.

## Patentansprüche

1. Verfahren in einer zweiten drahtlosen Vorrichtung (122) zur Handhabung von Relaisunterstützung von einer ersten drahtlosen Vorrichtung (121) in einem drahtlosen Netzwerk (100), wobei die zweite drahtlose Vorrichtung (122) von einem Netzknoten (110) bedient wird oder diesen besetzt, wobei das Verfahren Folgendes umfasst:
*Messen* (201) an Referenzsignalen vom Netzknoten (110) eines oder mehrerer von: Referenzsignalempfangsleistung, RSRP, Referenzsignalempfangsqualität, RSRQ, und Empfangssignalstärkeanzeige, RSSI, wobei das Verfahren Folgendes umfasst:
*Senden* (202) eines ersten Bakensignals an die erste drahtlose Vorrichtung (121), wenn eine der Messungen von RSRP, RSSI, und/oder RSRQ unter einen Schwellenwert fällt, wobei das erste Bakensignal Informationen über bevorzugte Relaistypen der zweiten drahtlosen Vorrichtung (122) umfasst und wobei das erste Bakensignal anzeigt, dass die zweite drahtlose Vorrichtung (122) eine Relaisunterstützung in einer Funkkommunikation benötigt,
*Empfangen* (203) eines zweiten Bakensignals von der ersten drahtlosen Vorrichtung (121), wobei das zweite Bakensignal Informationen über eine oder mehrere der Folgenden umfasst: Verbindungsqualität und/oder Signalstärke mit dem dienenden Netzknoten, Übertragungsfähigkeit der ersten drahtlosen Vorrichtung (121), und wobei das zweite Bakensignal anzeigt, dass die erste drahtlose Vorrichtung (121) Relaisunterstützung in Übereinstimmung mit den bevorzugten Relaistypen in einer Funkkommunikation in dem drahtlosen Netzwerk (100) bereitstellt, und *Konfigurieren* (209) eines Gerät-zu-Gerät-Trägers (D2D-Trägers) zwischen der ersten drahtlosen Vorrichtung (121) und der zweiten drahtlosen Vorrichtung (122) basierend auf dem ersten Bakensignal und/oder dem zweiten Bakensignal, um die Kommunikation über den D2D-Träger (131) durchzuführen, wobei die erste drahtlose Vorrichtung (121) als Relaisknoten agiert, und
*Schätzen* (204) des Pfadverlustes zwischen der zweiten drahtlosen Vorrichtung (122) und der ersten drahtlosen Vorrichtung (121) auf dem zweiten Bakensignal, und
*Schätzen* (204) des Pfadverlustes zwischen der zweiten drahtlosen Vorrichtung (122) und dem Netzknoten (110),
wenn der geschätzte Pfadverlust zwischen der zweiten drahtlosen Vorrichtung (122) und der ersten drahtlosen Vorrichtung (121) niedriger ist als der geschätzte Pfadverlust zwischen der zweiten drahtlosen Vorrichtung (122) und dem Netzknoten (110), *Auswählen* (205) der ersten drahtlosen Vorrichtung (121) als Kandidat zum Bereitstellen von Relaisunterstützung.

2. Verfahren nach Anspruch 1, wobei die zweite drahtlose Vorrichtung (122) von einem Netzknoten (110) bedient wird, wobei das Verfahren ferner umfasst:
*Senden* (207) eines Berichts an den Netzknoten (110), wobei der Bericht eine Messung des zweiten Bakensignals umfasst, wobei die Messung von der zweiten drahtlosen Vorrichtung (122) durchgeführt wird.

3. Verfahren nach einem der Ansprüche 1 bis 2, ferner umfassend: *Empfangen* (208) der Konfiguration des D2D-Trägers (131) zwischen der ersten drahtlosen Vorrichtung (121) und der zweiten drahtlosen Vorrichtung (122) vom Netzknoten (110), wodurch die Kommunikation über den D2D-Träger (131) durchgeführt werden kann.

4. Verfahren nach einem der Ansprüche 1 bis 3, wobei das **erste Bakensignal** ferner Informationen über eine oder mehrere der Folgenden umfasst: Anreiz zur Unterstützung der zweiten drahtlosen Vorrichtung (122), Art der von der zweiten drahtlosen Vorrichtung (122) benötigten Hilfe, Positionsinformationen der zweiten drahtlosen Vorrichtung (122), Geschwindigkeitsinformationen der zweiten drahtlosen Vorrichtung (122), UE-Fähigkeitsinformationen der zweiten drahtlosen Vorrichtung (122), Gruppenidentität der zweiten drahtlosen Vorrichtung (122), Heimbetreiber und/oder besuchter Betreiber der zweiten drahtlosen Vorrichtung (122).

5. Verfahren nach einem der Ansprüche 1 bis 4, wobei das **zweite Bakensignal** ferner Informationen über eines oder mehrere von Folgendem umfasst: Positionsinformationen der ersten drahtlosen Vorrichtung (121), Geschwindigkeitsinformationen der ersten drahtlosen Vorrichtung (121), UE-Fähigkeitsinformationen der ersten drahtlosen Vorrichtung (121), Gruppenidentität der ersten drahtlosen Vorrichtung (121), Heimbetreiber der ersten drahtlosen Vorrichtung (121), besuchter Betreiber der ersten drahtlosen Vorrichtung (121).

6. Verfahren in einem Netzknoten (110) zur Handhabung der Relaisunterstützung durch eine erste drahtlose Vorrichtung (121) für eine zweite drahtlose Vorrichtung (122) in einem drahtlosen Netzwerk (100), wobei die zweite drahtlose Vorrichtung (122) Relaisunterstützung in einer Funkkommunikation benötigt, wobei das Verfahren Folgendes umfasst:
*Empfangen* (602) eines oder mehrerer Berichte von der ersten drahtlosen Vorrichtung (121) und/oder der zweiten drahtlosen Vorrichtung (122), wobei ein oder mehrere Berichte eine entsprechende Messung eines zwischen der ersten drahtlosen Vorrichtung und der zweiten drahtlosen Vorrichtung gesendeten Bakensignals umfassen, wobei das *Empfangen* (602) eines oder mehrerer Berichte das Empfangen von der zweiten drahtlosen Vorrichtung (122) eines Berichts umfasst, der den Pfadverlust zwischen der zweiten drahtlosen Vorrichtung (122) und der ersten drahtlosen Vorrichtung (121) umfasst, die ein Kandidat zum Bereitstellen von Relaisunterstützung ist, und basierend auf dem berichteten Pfadverlust, *Bestimmen* (603), dass die erste drahtlose Vorrichtung (121) als Kandidat Relaisunterstützung bereitstellen soll, wenn der Kandidat eine Route von der zweiten drahtlosen Vorrichtung (122) über den Kandidaten zum Netzknoten (110) bereitstellt, die eine höhere Datenrate als eine Route von der zweiten drahtlosen Vorrichtung (122) direkt zum Netzknoten (110) aufweist,
wobei das Bakensignal ein erstes Bakensignal ist, das von der zweiten drahtlosen Vorrichtung (122) an die erste drahtlose Vorrichtung (121) übertragen wird, wobei das erste Bakensignal Informationen über bevorzugte Relaistypen der zweiten drahtlosen Vorrichtung (122) umfasst und wobei das erste Bakensignal anzeigt, dass die zweite drahtlose Vorrichtung (122) eine Relaisunterstützung in einer Funkkommunikation benötigt, oder
wobei das Bakensignal ein zweites Bakensignal ist, das von der ersten drahtlosen Vorrichtung (121) an die zweite drahtlose Vorrichtung (122) übertragen wird, wobei das zweite Bakensignal anzeigt, dass die erste drahtlose Vorrichtung (121) Relaisunterstützung, gemäß den bevorzugten Relaistypen, in einer Funkkommunikation im drahtlosen Netzwerk (100) bereitstellt, und wenn die Messung in dem einen oder den mehreren Berichten eine ausreichend starke D2D-Verbindung anzeigt, *Senden* (604) an die erste drahtlose Vorrichtung und die zweite drahtlose Vorrichtung einer Konfiguration eines Gerät-zu-Gerät-Trägers (D2D-Trägers) (131) zwischen der ersten drahtlosen Vorrichtung (121) und der zweiten drahtlosen Vorrichtung (122), wodurch die Kommunikation über den D2D-Träger (131) durchgeführt werden kann, wobei die erste drahtlose Vorrichtung (121) als Relaisknoten agiert, der gemäß den bevorzugten Relaistypen Relaisunterstützung bereitstellt, und
wobei das *Empfangen* (602) eines oder mehrerer Berichte ferner das Empfangen von der einen oder den mehreren weiteren drahtlosen Vorrichtungen (123, 124) eines entsprechenden Berichts umfasst, der den Pfadverlust zwischen der zweiten drahtlosen Vorrichtung (122) und den jeweiligen weiteren drahtlosen Vorrichtungen (123, 124) umfasst, die ebenfalls Kandidaten (123, 124) zum Bereitstellen von Relaisunterstützung sind, und
basierend auf dem berichteten Pfadverlust, *Bestimmen* (603), dass der Kandidat (121, 123, 124), der eine Route mit der höchsten Datenrate bereitstellt, eine Relaisunterstützung bereitstellen soll, wobei die Route von der zweiten drahtlosen Vorrichtung (122) über den Kandidaten (121, 123, 124) zum Netzknoten (110) führt, wenn dieser Kandidat (121, 123, 124) eine Route bereitstellt, die eine höhere Datenrate als eine Route von der zweiten drahtlosen Vorrichtung (122) direkt zum Netzknoten (110) aufweist.

7. Verfahren nach Anspruch 6, wobei das Bakensignal ein erstes Bakensignal und/oder ein zweites Bakensignal umfasst, wobei das Verfahren ferner Folgendes umfasst:
*Zuweisen* (601) eines Kanals für das erste Bakensignal, das von der zweiten drahtlosen Vorrichtung (122) gesendet wird, wobei das erste Bakensignal anzeigt, dass die zweite drahtlose Vorrichtung (122) eine Relaisunterstützung in einer Funkkommunikation benötigt, und/oder
*Zuweisen* (601) eines Kanals für das zweite Bakensignal, das von der ersten drahtlosen Vorrichtung (121) gesendet wird, wobei das zweite Bakensignal anzeigt, dass die erste drahtlose Vorrichtung (121) in der Lage ist, Relaisunterstützung in einer Funkkommunikation im drahtlosen Netzwerk (100) bereitzustellen.

8. Verfahren in einer ersten drahtlosen Vorrichtung (121) zur Handhabung von Relaisunterstützung für eine zweite drahtlose Vorrichtung (122) in einem drahtlosen Netzwerk (100), wobei die erste drahtlose Vorrichtung (121) von einem Netzknoten (110) bedient wird oder diesen besetzt, wobei das Verfahren Folgendes umfasst:
*Messen* (401) an Referenzsignalen vom Netzknoten (110) eines oder mehrerer von: Referenzsignalempfangsleistung, RSRP, Referenzsignalempfangsqualität, RSRQ, und Empfangssignalstärkeanzeige, RSSI, wobei das Verfahren umfasst: *Empfangen* (402) eines ersten Bakensignals von der zweiten drahtlosen Vorrichtung (122), wobei das erste Bakensignal Informationen über bevorzugte Relaistypen der zweiten drahtlosen Vorrichtung (122) umfasst und wobei das erste Bakensignal anzeigt, dass die zweite drahtlose Vorrichtung (122) eine Relaisunterstützung in einer Funkkommunikation benötigt,
*Senden* (403) eines zweiten Bakensignals, das von der zweiten drahtlosen Vorrichtung (122) empfangen werden soll, wenn eine der Messungen von RSRP, RSSI, und/oder RSRQ einen Schwellenwert überschreitet, wobei das zweite Bakensignal Informationen über eines oder mehrere von Folgendem umfasst: Verbindungsqualität und/oder Signalstärke mit dem dienenden Netzknoten, Übertragungsfähigkeit der ersten drahtlosen Vorrichtung (121), und wobei das zweite Bakensignal anzeigt, dass die erste drahtlose Vorrichtung (121) Relaisunterstützung in Übereinstimmung mit den bevorzugten Relaistypen in einer Funkkommunikation im drahtlosen Netzwerk (100) bereitstellen kann, und
*Konfigurieren* (406) eines Gerät-zu-Gerät-Trägers (D2D-Trägers) (131) zwischen der ersten drahtlosen Vorrichtung (121) und der zweiten drahtlosen Vorrichtung (122) basierend auf dem ersten Bakensignal und/oder dem zweiten Bakensignal, um die Funkkommunikation über den D2D-Träger (131) durchzuführen, wobei die erste drahtlose Vorrichtung (121) als Relaisknoten agiert.

9. Verfahren nach Anspruch 8, wobei die erste drahtlose Vorrichtung (121) von einem Netzknoten (110) bedient wird, wobei das Verfahren ferner Folgendes umfasst:
*Senden* (404) eines Berichts an den Netzknoten (110), wobei der Bericht eine Messung des ersten Bakensignals umfasst, wobei die Messung von der ersten drahtlosen Vorrichtung (121) durchgeführt wird.

10. Zweite drahtlose Vorrichtung (122) zur Handhabung von Relaisunterstützung von einer ersten drahtlosen Vorrichtung (121) in einem drahtlosen Netzwerk (100), wobei die zweite drahtlose Vorrichtung (122) von einem Netzknoten (110) bedient wird oder diesen besetzt, wobei die zweite drahtlose Vorrichtung (122) Folgendes umfasst:
eine Empfangseinheit (320), die angepasst ist, um an Referenzsignalen vom Netzknoten (110) eines oder mehrere der Folgenden zu messen: Referenzsignalempfangsleistung, RSRP, Referenzsignalempfangsqualität, RSRQ, und Empfangssignalstärkeanzeige, RSSI,
wobei die zweite drahtlose Vorrichtung Folgendes umfasst:
eine Sendeeinheit (310), die angepasst ist, um ein erstes Bakensignal an die erste drahtlose Vorrichtung (121) zu senden, wenn eine der Messungen von RSRP, RSSI, und/oder RSRQ unter einen Schwellenwert fällt, wobei das erste Bakensignal Informationen über bevorzugte Relaistypen der zweiten drahtlosen Vorrichtung (122) umfasst und wobei das erste Bakensignal anzeigt, dass die zweite drahtlose Vorrichtung (122) eine Relaisunterstützung in einer Funkkommunikation benötigt,
wobei die Empfangseinheit (320) ferner angepasst ist, um ein zweites Bakensignal von der ersten drahtlosen Vorrichtung (121) zu empfangen, wobei das zweite Bakensignal Informationen über eine oder mehrere der Folgenden umfasst: Verbindungsqualität und/oder Signalstärke mit dem dienenden Netzknoten, Übertragungsfähigkeit der ersten drahtlosen Vorrichtung (121), und wobei das zweite Bakensignal anzeigt, dass die erste drahtlose Vorrichtung (121) Relaisunterstützung in Übereinstimmung mit den bevorzugten Relaistypen in einer Funkkommunikation im drahtlosen Netzwerk (100) bereitstellt,
wobei die zweite drahtlose Vorrichtung (122) ferner eine Konfigurationseinheit (330) umfasst, die angepasst ist, um einen Gerät-zu-Gerät-Träger (D2D-Träger) zwischen der ersten drahtlosen Vorrichtung (121) und der zweiten drahtlosen Vorrichtung (122) basierend auf dem ersten Bakensignal und/oder dem zweiten Bakensignal zu konfigurieren, um die Kommunikation über den D2D-Träger (131) durchzuführen, wobei die erste drahtlose Vorrichtung (121) als ein Relaisknoten agiert,
und wobei die Empfangseinheit (320) ferner angepasst ist, um den Pfadverlust zwischen der zweiten drahtlosen Vorrichtung (122) und der ersten drahtlosen Vorrichtung (121) auf dem zweiten Bakensignal zu schätzen und um den Pfadverlust zwischen der zweiten drahtlosen Vorrichtung (122) und dem Netzknoten (110) zu schätzen,
die zweite drahtlose Vorrichtung (122) umfasst ferner einen Prozessor (340), der angepasst ist, um die erste drahtlose Vorrichtung (121) als einen Kandidaten zum Bereitstellen von Relaisunterstützung auszuwählen, wenn der geschätzte Pfadverlust zwischen der zweiten drahtlosen Vorrichtung (122) und der ersten drahtlosen Vorrichtung (121) niedriger als der geschätzte Pfadverlust zwischen der zweiten drahtlosen Vorrichtung (122) und dem Netzknoten (110) ist.

11. Zweite drahtlose Vorrichtung (122) nach Anspruch 10, wobei die zweite drahtlose Vorrichtung (122) von einem Netzknoten (110) bedient wird, und
wobei die Sendeeinheit (310) ferner angepasst ist, um einen Bericht an den Netzknoten (110) zu senden, wobei der Bericht eine Messung des zweiten Bakensignals umfasst, wobei die Messung durch die zweite drahtlose Vorrichtung (122) durchgeführt wird.

12. Zweite drahtlose Vorrichtung (122) nach einem der Ansprüche 10 bis 11, ferner umfassend:
wobei die Empfangseinheit (320) ferner angepasst ist, um vom Netzknoten (110) die Konfiguration des D2D-Trägers (131) zwischen der ersten drahtlosen Vorrichtung (121) und der zweiten drahtlosen Vorrichtung (122) zu empfangen, wodurch die Kommunikation über den D2D-Träger (131) durchgeführt werden kann.

13. Netzknoten (110) zur Handhabung der Relaisunterstützung durch eine erste drahtlose Vorrichtung (121) für eine zweite drahtlose Vorrichtung (122) in einem drahtlosen Netzwerk (100), wobei die zweite drahtlose Vorrichtung (122) Relaisunterstützung in einer Funkkommunikation benötigt, wobei der Netzknoten (110) Folgendes umfasst:
eine Empfangseinheit (710), die angepasst ist, um einen oder mehrere Berichte von der ersten drahtlosen Vorrichtung (121) und/oder der zweiten drahtlosen Vorrichtung (122) zu empfangen, wobei ein oder mehrere Berichte eine entsprechende Messung eines zwischen der ersten drahtlosen Vorrichtung und der zweiten drahtlosen Vorrichtung gesendeten Bakensignals umfassen, wobei die Empfangseinheit (710) ferner angepasst ist, um von der zweiten drahtlosen Vorrichtung (122) einen Bericht zu empfangen, der den Pfadverlust zwischen der zweiten drahtlosen Vorrichtung (122) und der ersten drahtlosen Vorrichtung (121) umfasst, die ein Kandidat zum Bereitstellen von Relaisunterstützung ist, und
wobei der Netzknoten (110) ferner einen Prozessor (730) umfasst, und wobei der Prozessor (730) basierend auf dem berichteten Pfadverlust angepasst ist, um zu bestimmen, dass die erste drahtlose Vorrichtung (121) als Kandidat Relaisunterstützung bereitstellen soll, wenn der Kandidat eine Route von der zweiten drahtlosen Vorrichtung (122) über den Kandidaten zum Netzknoten (110) bereitstellt, die eine höhere Datenrate als eine Route von der zweiten drahtlosen Vorrichtung (122) direkt zum Netzknoten (110) aufweist,
wobei das Bakensignal ein erstes Bakensignal ist, das von der zweiten drahtlosen Vorrichtung (122) an die erste drahtlose Vorrichtung (121) übertragen wird, wobei das erste Bakensignal Informationen über einen oder mehrere bevorzugte Relaistypen der zweiten drahtlosen Vorrichtung (122) umfasst und wobei das erste Bakensignal anzeigt, dass die zweite drahtlose Vorrichtung (122) eine Relaisunterstützung in einer Funkkommunikation benötigt, oder
wobei das Bakensignal ein zweites Bakensignal ist, das von der ersten drahtlosen Vorrichtung (121) an die zweite drahtlose Vorrichtung (122) übertragen wird, wobei das zweite Bakensignal anzeigt, dass die erste drahtlose Vorrichtung (121) Relaisunterstützung in einer Funkkommunikation im drahtlosen Netzwerk (100) bereitstellt, und
eine Sendeeinheit (720), die angepasst ist, um, wenn die Messung in dem einen oder den mehreren Berichten eine ausreichend starke D2D-Verbindung anzeigt, an die erste drahtlose Vorrichtung (121) und die zweite drahtlose Vorrichtung (122) eine Konfiguration eines Gerät-zu-Gerät-Trägers (D2D-Trägers) (131) zwischen der ersten drahtlosen Vorrichtung (121) und der zweiten drahtlosen Vorrichtung (122) zu senden, so dass die Kommunikation über den D2D-Träger (131) durchgeführt werden kann, wobei die erste drahtlose Vorrichtung (121) als ein Relaisknoten agiert, der gemäß den bevorzugten Relaistypen Relaisunterstützung bereitstellt, und
wobei die Empfangseinheit (710) ferner angepasst ist, um von der einen oder den mehreren weiteren drahtlosen Vorrichtungen (123, 124) einen entsprechenden Bericht zu empfangen, der den Pfadverlust zwischen der zweiten drahtlosen Vorrichtung (122) und den jeweiligen weiteren drahtlosen Vorrichtungen (123, 124) umfasst, die ebenfalls Kandidaten (123, 124) zum Bereitstellen von Relaisunterstützung sind, und
und wobei der Prozessor (730) ferner angepasst ist, um zu bestimmen, dass der Kandidat (121, 123, 124), der eine Route mit der höchsten Datenrate bereitstellt, eine Relaisunterstützung bereitstellen soll, wobei die Route von der zweiten drahtlosen Vorrichtung (122) über den Kandidaten (121, 123, 124) zum Netzknoten (110) führt, wenn dieser Kandidat (121, 123, 124) eine Route bereitstellt, die eine höhere Datenrate als eine Route von der zweiten drahtlosen Vorrichtung (122) direkt zum Netzknoten (110), basierend auf dem berichteten Pfadverlust, aufweist.

14. Netzknoten (110) nach Anspruch 13, wobei der Netzknoten (110) ferner eine Zuordnungseinheit (740) umfasst, die zum Zuweisen von Folgendem angepasst ist:
einem Kanal für das erste Bakensignal, das von der zweiten drahtlosen Vorrichtung (122) gesendet wird, wobei das erste Bakensignal anzeigt, dass die zweite drahtlose Vorrichtung (122) eine Relaisunterstützung in einer Funkkommunikation benötigt, und/oder
einem Kanal für das zweite Bakensignal, das von der ersten drahtlosen Vorrichtung (121) gesendet wird, wobei das zweite Bakensignal anzeigt, dass die erste drahtlose Vorrichtung (121) Relaisunterstützung in einer Funkkommunikation im drahtlosen Netzwerk (100) bereitstellen kann.

15. Erste drahtlose Vorrichtung (121) zur Handhabung von Relaisunterstützung für eine zweite drahtlose Vorrichtung (122) in einem drahtlosen Netzwerk (100), wobei die erste drahtlose Vorrichtung (121) von einem Netzknoten (110) bedient wird oder diesen besetzt, wobei die erste drahtlose Vorrichtung (121) Folgendes umfasst:
eine Empfangseinheit (510), die angepasst ist, um an Referenzsignalen vom Netzknoten (110) eines oder mehrere der Folgenden zu messen: Referenzsignalempfangsleistung, RSRP, Referenzsignalempfangsqualität, RSRQ, und Empfangssignalstärkeanzeige, RSSI,
wobei die erste drahtlose Vorrichtung Folgendes umfasst:
die Empfangseinheit (510) ist ferner angepasst, um ein erstes Bakensignal von der zweiten drahtlosen Vorrichtung (122) zu empfangen, wobei das erste Bakensignal Informationen über bevorzugte Relaistypen der zweiten drahtlosen Vorrichtung (122) umfasst und wobei das erste Bakensignal anzeigt, dass die zweite drahtlose Vorrichtung (122) Relaisunterstützung in einer Funkkommunikation benötigt,
eine Sendeeinheit (520) die angepasst ist, um ein zweites Bakensignal zu senden, das von der zweiten drahtlosen Vorrichtung (122) empfangen werden soll, wenn eine der Messungen von RSRP, RSSI, und/oder RSRQ unter einen Schwellenwert fällt, wobei das zweite Bakensignal Informationen über eines oder mehrere von Folgendem umfasst: Verbindungsqualität und/oder Signalstärke mit dem dienenden Netzknoten, Übertragungsfähigkeit der ersten drahtlosen Vorrichtung (121), und wobei das zweite Bakensignal anzeigt, dass die erste drahtlose Vorrichtung (121) Relaisunterstützung in Übereinstimmung mit den bevorzugten Relaistypen in einer Funkkommunikation im drahtlosen Netzwerk (100) bereitstellen kann,
die erste drahtlose Vorrichtung (121) umfasst ferner eine Konfigurationseinheit (530), die angepasst ist, um einen Gerät-zu-Gerät-Träger (D2D-Träger) (131) zwischen der ersten drahtlosen Vorrichtung (121) und der zweiten drahtlosen Vorrichtung (122) basierend auf dem ersten Bakensignal und/oder dem zweiten Bakensignal zu konfigurieren, um die Funkkommunikation über den D2D-Träger (131) durchzuführen, wobei die erste drahtlose Vorrichtung (121) als ein Relaisknoten agiert.

## Revendications

1. Procédé dans un deuxième dispositif sans fil (122) pour la prise en charge d'une assistance de relais à partir d'un premier dispositif sans fil (121) dans un réseau sans fil (100) dans lequel le deuxième dispositif sans fil (122) est desservi par, ou est mis en attente sur, un noeud de réseau (110), le procédé comprend :
la *mesure* (201) sur des signaux de référence provenant du noeud de réseau (110), d'un ou plusieurs parmi une puissance reçue de signal de référence, RSRP, une qualité reçue de signal de référence, RSRQ, et un indicateur de force de signal reçu, RSSI, le procédé comprenant :
l'*envoi* (202) d'un premier signal de balise au premier dispositif sans fil (121) lorsque l'une quelconque des mesures de RSRP, RSSI et/ou RSRQ descend en dessous d'un seuil, lequel premier signal de balise comprend des informations concernant des types de relais préférés du deuxième dispositif sans fil (122) et lequel premier signal de balise annonce que le deuxième dispositif sans fil (122) nécessite une assistance de relais dans une communication radio,
la *réception* (203) d'un deuxième signal de balise depuis le premier dispositif sans fil (121), lequel deuxième signal de balise comprend des informations concernant l'une quelconque ou plusieurs quelconques parmi : une qualité de liaison et/ou une force de signal vers un noeud de réseau de desserte, une capacité de relayage du premier dispositif sans fil (121) et lequel deuxième signal de balise annonce que le premier dispositif sans fil (121) fournit une assistance de relais, conformément aux types de relais préférés, dans une communication radio dans le réseau sans fil (100), et la *configuration* (209) d'une porteuse de dispositif à dispositif, D2D, entre le premier dispositif sans fil (121) et le deuxième dispositif sans fil (122) sur la base du premier signal de balise et/ou du deuxième signal de balise, permettant à ladite communication d'être mise en oeuvre via la porteuse D2D (131) dans lequel le premier dispositif sans fil (121) joue le rôle de noeud de relais, et
l'*estimation* (204) de l'affaiblissement de propagation entre le deuxième dispositif sans fil (122) et le premier dispositif sans fil (121) sur le deuxième signal de balises, et
l'*estimation* (204) de l'affaiblissement de propagation entre le deuxième dispositif sans fil (122) et le noeud de réseau (110), lorsque l'affaiblissement de propagation estimé entre le deuxième dispositif sans fil (122) et le premier dispositif sans fil (121) est plus bas par comparaison avec l'affaiblissement de propagation estimé entre le deuxième dispositif sans fil (122) et le noeud de réseau (110), la *sélection* (205) du premier dispositif sans fil (121) en tant que candidat pour fournir une assistance de relais.

2. Procédé selon la revendication 1, dans lequel le deuxième dispositif sans fil (122) est desservi par un noeud de réseau (110), le procédé comprenant en outre :
l'*envoi* (207) d'un rapport au noeud de réseau (110), lequel rapport comprend une mesure du deuxième signal de balise, laquelle mesure est mise en oeuvre par le deuxième dispositif sans fil (122).

3. Procédé selon l'une quelconque des revendications 1 ou 2, comprenant en outre :
la *réception* (208) depuis le noeud de réseau (110), de la configuration de la porteuse D2D (131) entre le premier dispositif sans fil (121) et le deuxième dispositif sans fil (122), permettant à ladite communication d'être mise en oeuvre via la porteuse D2D (131).

4. Procédé selon l'une quelconque des revendications 1 à 3, dans lequel le **premier signal de balise** comprend en outre des informations concernant l'un quelconque ou plusieurs quelconques parmi : une incitation d'assistance au deuxième dispositif sans fil (122), un type d'aide requis par le deuxième dispositif sans fil (122), des informations de position du deuxième dispositif sans fil (122), des informations de vitesse du deuxième dispositif sans fil (122), des informations de capacité d'UE du deuxième dispositif sans fil (122), une identité de groupe du deuxième dispositif sans fil (122), un opérateur domestique et/ou un opérateur visité du deuxième dispositif sans fil (122).

5. Procédé selon l'une quelconque des revendications 1 à 4, dans lequel le **deuxième signal de balise** comprend en outre des informations concernant l'un quelconque ou plusieurs quelconques parmi : des informations de position du premier dispositif sans fil (121), des informations de vitesse du premier dispositif sans fil (121), des informations de capacité d'UE du premier dispositif sans fil (121), une identité de groupe du premier dispositif sans fil (121), un opérateur domestique du premier dispositif sans fil (121), un opérateur visité du premier dispositif sans fil (121).

6. Procédé dans un noeud de réseau (110) pour la prise en charge d'une assistance de relais par un premier dispositif sans fil (121) vers un deuxième dispositif sans fil (122) dans un réseau sans fil (100), lequel deuxième dispositif sans fil (122) nécessite une assistance de relais dans une communication radio, le procédé comprenant :
la *réception* (602) d'un ou plusieurs rapports depuis le premier dispositif sans fil (121) et/ou le deuxième dispositif sans fil (122), lequel ou lesquels rapports comprennent une mesure respective d'un signal de balise envoyé entre le premier dispositif sans fil et le deuxième dispositif sans fil, dans lequel la *réception* (602) d'un ou plusieurs rapports comprend la réception depuis le deuxième dispositif sans fil (122), d'un rapport comprenant l'affaiblissement de propagation entre le deuxième dispositif sans fil (122) et le premier dispositif sans fil (121) étant un candidat pour fournir une assistance de relais, et sur la base de l'affaiblissement de propagation rapporté, la *détermination* (603) que le premier dispositif sans fil (121) étant un candidat fournira une assistance de relais, si le candidat fournit une voie, depuis le deuxième dispositif sans fil (122) via le candidat vers le noeud de réseau (110), qui a un plus haut débit de données qu'une voie allant du deuxième dispositif sans fil (122) directement au noeud de réseau (110),
dans lequel le signal de balise est un premier signal de balise transmis du deuxième dispositif sans fil (122) au premier dispositif sans fil (121), lequel premier signal de balise comprend des informations concernant les types de relais préférés du deuxième dispositif sans fil (122) et lequel premier signal de balise annonce que le deuxième dispositif sans fil (122) nécessite une assistance de relais dans une communication radio, ou
dans lequel le signal de balise est un deuxième signal de balise transmis du premier dispositif sans fil (121) au deuxième dispositif sans fil (122), lequel deuxième signal de balise annonce que le premier dispositif sans fil (121) fournit une assistance de relais, conformément aux types de relais préférés, dans une communication radio dans le réseau sans fil (100), et
lorsque la mesure dans le ou les rapports indique une liaison D2D suffisamment forte, l'*envoi* (604) au premier dispositif sans fil et au deuxième dispositif sans fil, d'une configuration d'une porteuse de dispositif à dispositif, D2D, (131) entre le premier dispositif sans fil (121) et le deuxième dispositif sans fil (122), permettant à ladite communication d'être mise en oeuvre via la porteuse D2D (131) dans lequel le premier dispositif sans fil (121) joue le rôle de noeud de relais fournissant une assistance de relais, conformément aux types de relais préférés, et
dans lequel la *réception* (602) d'un ou plusieurs rapports comprend en outre la réception depuis le ou les dispositifs sans fil supplémentaires (123, 124), d'un rapport respectif comprenant l'affaiblissement de propagation entre le deuxième dispositif sans fil (122) et des dispositifs sans fil supplémentaires respectifs (123, 124) étant également candidats (123, 124) pour fournir une assistance de relais, et
sur la base de l'affaiblissement de propagation rapporté, la *détermination* (603) que le candidat (121, 123, 124) qui fournit une voie avec le plus haut débit de données fournira une assistance de relais, laquelle voie va du deuxième dispositif sans fil (122) via le candidat (121, 123, 124) au noeud de réseau (110) si ce candidat (121, 123, 124) fournit une voie qui a un plus haut débit de données qu'une voie allant du deuxième dispositif sans fil (122) directement au noeud de réseau (110).

7. Procédé selon la revendication 6, dans lequel le signal de balise comprend un premier signal de balise et/ou un deuxième signal de balise, le procédé comprenant en outre :
l'*allocation* (601) d'un canal pour le premier signal de balise à envoyer par le deuxième dispositif sans fil (122), lequel premier signal de balise annonce que le deuxième dispositif sans fil (122) exige une assistance de relais dans une communication radio, et/ou
l'*allocation* (601) d'un canal pour le deuxième signal de balise à envoyer par le premier dispositif sans fil (121), lequel deuxième signal de balise annonce que le premier dispositif sans fil (121) est capable de fournir une assistance de relais dans une communication radio dans le réseau sans fil (100).

8. Procédé dans un premier dispositif sans fil (121) pour la prise en charge d'une assistance de relais pour un deuxième dispositif sans fil (122) dans un réseau sans fil (100) dans lequel le premier dispositif sans fil (121) est desservi par, ou est mis en attente sur un noeud de réseau (110), le procédé comprend :
la *mesure* (401) sur des signaux de référence provenant du noeud de réseau (110), d'un ou plusieurs parmi une puissance reçue de signal de référence, RSRP, une qualité reçue de signal de référence, RSRQ, et un indicateur de force de signal reçu, RSSI, le procédé comprenant :
la *réception* (402) d'un premier signal de balise depuis le deuxième dispositif sans fil (122), lequel premier signal de balise comprend des informations concernant des types de relais préférés du deuxième dispositif sans fil (122) et lequel premier signal de balise annonce que le deuxième dispositif sans fil (122) nécessite une assistance de relais dans une communication radio,
*l'envoi* (403) d'un deuxième signal de balise pour être reçu par le deuxième dispositif sans fil (122) lorsque l'une quelconque des mesures de RSRP, RSSI et/ou RSRQ dépasse un seuil, lequel deuxième signal de balise comprend des informations concernant l'une quelconque ou plusieurs quelconques parmi : une qualité de liaison et/ou une force de signal vers le noeud de réseau de desserte, une capacité de relayage du premier dispositif sans fil (121) et lequel deuxième signal de balise annonce que le premier dispositif sans fil (121) a une capacité pour fournir une assistance de relais, conformément aux types de relais préférés, dans une communication radio dans le réseau sans fil (100), et
la *configuration* (406) d'une porteuse de dispositif à dispositif, D2D (131) entre le premier dispositif sans fil (121) et le deuxième dispositif sans fil (122) sur la base du premier signal de balise et/ou du deuxième signal de balise, permettant à ladite communication radio d'être mise en oeuvre via la porteuse D2D (131) dans lequel le premier dispositif sans fil (121) joue le rôle de noeud de relais.

9. Procédé selon la revendication 8, dans lequel le premier dispositif sans fil (121) est desservi par un noeud de réseau (110), le procédé comprenant en outre :
l'e*nvoi* (404) d'un rapport au noeud de réseau (110), lequel rapport comprend une mesure du premier signal de balise, laquelle mesure est mise en oeuvre par le premier dispositif sans fil (121).

10. Deuxième dispositif sans fil (122) pour la prise en charge d'une assistance de relais depuis un premier dispositif sans fil (121) dans un réseau sans fil (100) dans lequel le deuxième dispositif sans fil (122) est desservi par, ou est mis en attente sur, un noeud de réseau (110), le deuxième dispositif sans fil (122) comprend :
une unité de réception (320) qui est conçue pour mesurer sur des signaux de référence provenant du noeud de réseau (110), un ou plusieurs parmi une puissance reçue de signal de référence, RSRP, une qualité reçue de signal de référence, RSRQ, et un indicateur de force de signal reçu, RSSI,
le deuxième dispositif sans fil comprenant :
une unité d'envoi (310) conçue pour envoyer un premier signal de balise au premier dispositif sans fil (121) lorsque l'une quelconque des mesures de RSRP, RSSI et/ou RSRQ descend en dessous d'un seuil, lequel premier signal de balise comprend des informations concernant des types de relais préférés du deuxième dispositif sans fil (122) et lequel premier signal de balise annonce que le deuxième dispositif sans fil (122) nécessite une assistance de relais dans une communication radio,
dans lequel l'unité de réception (320) est en outre conçue pour recevoir un deuxième signal de balise depuis le premier dispositif sans fil (121), lequel deuxième signal de balise comprend des informations concernant l'une quelconque ou plusieurs quelconques parmi : une qualité de liaison et/ou une force de signal vers le noeud de réseau de desserte, une capacité de relayage du premier dispositif sans fil (121) et lequel deuxième signal de balise annonce que le premier dispositif sans fil (121) fournit une assistance de relais, conformément aux types de relais préférés, dans une communication radio dans le réseau sans fil (100),
dans lequel le deuxième dispositif sans fil (122) comprend en outre une unité de configuration (330) conçue pour configurer une porteuse de dispositif à dispositif, D2D, entre le premier dispositif sans fil (121) et le deuxième dispositif sans fil (122) sur la base du premier signal de balise et/ou du deuxième signal de balise, permettant à ladite communication d'être mise en oeuvre via la porteuse D2D (131) dans lequel le premier dispositif sans fil (121) joue le rôle de noeud de relais,
et dans lequel l'unité de réception (320) est en outre conçue pour estimer l'affaiblissement de propagation entre le deuxième dispositif sans fil (122) et le premier dispositif sans fil (121) sur le deuxième signal de balises, et pour estimer l'affaiblissement de propagation entre le deuxième dispositif sans fil (122) et le noeud de réseau (110),
le deuxième dispositif sans fil (122) comprend en outre un processeur (340) conçu pour sélectionner le premier dispositif sans fil (121) en tant que candidat pour fournir une assistance de relais, lorsque l'affaiblissement de propagation estimé entre le deuxième dispositif sans fil (122) et le premier dispositif sans fil (121) est plus bas par comparaison avec l'affaiblissement de propagation estimé entre le deuxième dispositif sans fil (122) et le noeud de réseau (110).

11. Deuxième dispositif sans fil (122) selon la revendication 10, dans lequel le deuxième dispositif sans fil (122) est desservi par un noeud de réseau (110), et
dans lequel l'unité d'envoi (310) est en outre conçue pour envoyer un rapport au noeud de réseau (110), lequel rapport comprend une mesure du deuxième signal de balise, laquelle mesure est mise en oeuvre par le deuxième dispositif sans fil (122).

12. Deuxième dispositif sans fil (122) selon l'une quelconque des revendications 10 ou 11, comprenant en outre :
dans lequel l'unité de réception (320) est en outre conçue pour recevoir depuis le noeud de réseau (110), la configuration de la porteuse D2D (131) entre le premier dispositif sans fil (121) et le deuxième dispositif sans fil (122), permettant à ladite communication d'être mise en oeuvre via la porteuse D2D (131).

13. Noeud de réseau (110) pour la prise en charge d'une assistance de relais par un premier dispositif sans fil (121) vers un deuxième dispositif sans fil (122) dans un réseau sans fil (100), lequel deuxième dispositif sans fil (122) nécessite une assistance de relais dans une communication radio, le noeud de réseau (110) comprenant :
une unité de réception (710) conçue pour recevoir un ou plusieurs rapports depuis le premier dispositif sans fil (121) et/ou le deuxième dispositif sans fil (122), lequel ou lesquels rapports comprennent une mesure respective d'un signal de balise envoyé entre le premier dispositif sans fil et le deuxième dispositif sans fil dans lequel l'unité de réception (710) est en outre conçue pour recevoir depuis le deuxième dispositif sans fil (122), un rapport comprenant l'affaiblissement de propagation entre le deuxième dispositif sans fil (122) et le premier dispositif sans fil (121) étant un candidat pour fournir une assistance de relais, et
dans lequel le noeud de réseau (110) comprend en outre un processeur (730), et dans lequel le processeur (730), sur la base de l'affaiblissement de propagation rapporté, est conçu pour déterminer que le premier dispositif sans fil (121) étant un candidat fournira une assistance de relais, si le candidat fournit une voie, depuis le deuxième dispositif sans fil (122) via le candidat vers le noeud de réseau (110), qui a un plus haut débit de données qu'une voie depuis le deuxième dispositif sans fil (122) directement vers le noeud de réseau (110),
dans lequel le signal de balise est un premier signal de balise transmis du deuxième dispositif sans fil (122) au premier dispositif sans fil (121), lequel premier signal de balise comprend des informations concernant un ou plusieurs types de relais préférés du deuxième dispositif sans fil (122) et lequel premier signal de balise annonce que le deuxième dispositif sans fil (122) nécessite une assistance de relais dans une communication radio, ou
dans lequel le signal de balise est un deuxième signal de balise transmis du premier dispositif sans fil (121) au deuxième dispositif sans fil (122), lequel deuxième signal de balise annonce que le premier dispositif sans fil (121) fournit une assistance de relais dans une communication radio dans le réseau sans fil (100), et
une unité d'envoi (720) conçue pour, lorsque la mesure dans la ou les rapports indique une liaison D2D suffisamment forte, envoyer au premier dispositif sans fil (121) et au deuxième dispositif sans fil (122), une configuration d'une porteuse de dispositif à dispositif, D2D, (131) entre le premier dispositif sans fil (121) et le deuxième dispositif sans fil (122), permettant à ladite communication d'être mise en oeuvre via la porteuse D2D (131) dans lequel le premier dispositif sans fil (121) joue le rôle de noeud de relais fournissant une assistance de relais, conformément aux types de relais préférés, et
dans lequel l'unité de réception (710) est en outre conçue pour recevoir depuis le ou les dispositifs sans fil supplémentaires (123, 124), un rapport respectif comprenant l'affaiblissement de propagation entre le deuxième dispositif sans fil (122) et des dispositifs sans fil supplémentaires respectifs (123, 124) étant également des candidats (123, 124) pour fournir une assistance de relais, et
et dans lequel le processeur (730), est en outre conçu pour déterminer que le candidat (121, 123, 124) qui fournit une voie avec le plus haut débit de données fournira une assistance de relais, laquelle voie va du deuxième dispositif sans fil (122) via le candidat (121, 123, 124) au noeud de réseau (110) si ce candidat (121, 123, 124) fournit une voie qui a un plus haut débit de données qu'une voie allant du deuxième dispositif sans fil (122) directement au noeud de réseau (110), sur la base de l'affaiblissement de propagation rapporté.

14. Noeud de réseau (110) selon la revendication 13, dans lequel le noeud de réseau (110) comprend en outre une unité d'allocation (740) conçue pour allouer
un canal pour le premier signal de balise à envoyer par le deuxième dispositif sans fil (122), lequel premier signal de balise annonce que le deuxième dispositif sans fil (122) exige une assistance de relais dans une communication radio, et/ou un canal pour le deuxième signal de balise à envoyer par le premier dispositif sans fil (121), lequel deuxième signal de balise annonce que le premier dispositif sans fil (121) est capable de fournir une assistance de relais dans une communication radio dans le réseau sans fil (100).

15. Premier dispositif sans fil (121) pour la prise en charge d'une assistance de relais pour un deuxième dispositif sans fil (122) dans un réseau sans fil (100) dans lequel le premier dispositif sans fil (121) est desservi par, ou est mis en attente sur, un noeud de réseau (110), le premier dispositif sans fil (121) comprend :
une unité de réception (510) conçue pour mesurer sur des signaux de référence provenant du noeud de réseau (110), un ou plusieurs parmi une puissance reçue de signal de référence, RSRP, une qualité reçue de signal de référence, RSRQ, et un indicateur de force de signal reçu, RSSI
le premier dispositif sans fil comprenant :
l'unité de réception (510) qui est en outre conçue pour recevoir un premier signal de balise depuis le deuxième dispositif sans fil (122), lequel premier signal de balise comprend des informations concernant des types de relais préférés du deuxième dispositif sans fil (122) et lequel premier signal de balise annonce que le deuxième dispositif sans fil (122) nécessite une assistance de relais dans une communication radio,
une unité d'envoi (520) conçue pour envoyer un deuxième signal de balise destiné à être reçu par le deuxième dispositif sans fil (122) lorsque l'une quelconque des mesures de RSRP, RSSI et/ou RSRQ descend en dessous d'un seuil, lequel deuxième signal de balise comprend des informations concernant l'une quelconque ou plusieurs quelconques parmi : une qualité de liaison et/ou une force de signal vers le noeud de réseau de desserte, une capacité de relayage du premier dispositif sans fil (121) et lequel deuxième signal de balise annonce que le premier dispositif sans fil (121) a une capacité pour fournir une assistance de relais, conformément aux types de relais préférés, dans une communication radio dans le réseau sans fil (100),
le premier dispositif sans fil (121) comprend en outre une unité de configuration (530) conçue pour configurer une porteuse de dispositif à dispositif, D2D, (131) entre le premier dispositif sans fil (121) et le deuxième dispositif sans fil (122) sur la base du premier signal de balise et/ou du deuxième signal de balise, permettant à ladite communication radio d'être mise en oeuvre via la porteuse D2D (131) dans lequel le premier dispositif sans fil (121) joue le rôle de noeud de relais.
